# FASCICULE DE BREVET EUROPEEN

(11) **EP 1 692 421 B1**
(45) Date de publication et mention de la délivrance du brevet: **01.07.2009**
(21) Numéro de dépôt: 04805502.4
(22) Date de dépôt: 22.11.2004
(51) Int. Cl.: F16L 15/04

(54) **REALISATION, PAR EXPANSION PLASTIQUE, D UN JOINT TUBULAIRE ETANCHE AVEC SURFACE(S) DE BUTEE INCLINEE(S)**
HERSTELLUNG EINER ABGEDICHTETEN RÖHRENVERBINDUNG MIT GENEIGTER (GENEIGTEN) STOSSFLÄCHE(N) DURCH PLASTISCHE EXPANSION
PRODUCTION BY PLASTIC EXPANSION OF A SEALED TUBULAR JOINT WITH INCLINED ABUTTING SURFACE(S)

(30) Priorité: 28.11.2003 FR 0314038; 22.09.2004 FR 0410007
(43) Date de publication de la demande: 23.08.2006
(73) Titulaire: VALLOUREC MANNESMANN OIL & GAS FRANCE, 59620 Aulnoye-Aymeries (FR)
(72) Inventeur: DUBEDOUT, Laurent, 1er étage, F-59300 Valenciennes (FR); DUQUESNE, Benoît, Résidence le Jardin du Théâtre, F-59300 Valenciennes (FR); VERGER, Eric, F-59144 Gommegnies (FR); MOLINS, Grégory, F-59300 Valenciennes (FR)
(74) Mandataire: Plaçais, Jean Yves
(86) Numéro de dépôt international: PCT/FR2004/002971
(87) Numéro de publication internationale: WO 2005/064217

(56) Documents cités:
- WO-A-03/060370
- US-A- 4 611 838
- US-A1- 2002 163 192

## Description

L'invention concerne le domaine des joints tubulaires, comme par exemple ceux utilisés dans les puits d'hydrocarbures ou les puits similaires tels que les puits géothermiques.

Ces joints servent généralement à connecter entre eux des tubes de grande longueur ou des tubes de grande longueur et des manchons. Ils permettent ainsi de constituer des colonnes de tubes de cuvelage (ou "casings") ou de production (ou "tubings").

Par ailleurs, ces joints doivent supporter d'importantes contraintes de flexion, de traction, de compression, et parfois de torsion, ainsi que d'importants écarts de pression entre l'intérieur et l'extérieur. En outre, ces joints doivent parfois être également étanches aux gaz.
Pour ces raisons, les joints sont fréquemment de type fileté et les manchons et tubes sont généralement en acier ou en alliage à hautes limites d'élasticité (obtenues éventuellement par traitements thermiques). Dans le cas de joints filetés, l'étanchéité aux gaz est le plus souvent assurée par des portées d'étanchéité avec contact serrant de type "métal sur métal".

Afin de réduire l'encombrement initial des tubes, ainsi qu'éventuellement permettre le forage de puits de diamètre uniforme, il a été proposé, notamment dans les documents US 6,604,763 et WO 03/071086, de les expanser diamétralement à force in situ à l'aide d'un outil d'expansion appelé "boulet". Des joints filetés étanches, comme par exemple ceux décrits dans le document EP 0488912, peuvent supporter une telle expansion mais perdent leurs caractéristiques d'étanchéité lors de l'expansion, le nez en extrémité de l'élément mâle qui porte une surface d'étanchéité mâle plongeant vers l'axe lors de l'expansion (effet "banane"), ce qui rompt l'étanchéité.

Afin de résoudre ce problème, la Demanderesse a proposé dans le document WO 02/01102 un joint tubulaire fileté dont le nez mâle est muni en extrémité d'un doigt annulaire encastré dans une rainure femelle, la rainure formant un support pour le doigt et empêchant la plongée du doigt mâle vers l'axe, lors de l'expansion.

Un tel joint fileté ne présente toutefois pas de caractéristiques d'étanchéité suffisamment élevées lorsque le taux d'expansion est supérieur à 10%. En effet, les déformations induites par le boulet d'expansion déplacent, voire même suppriment, les contacts entre le doigt mâle et la rainure, ce qui déplace, en les diminuant, voire même en les supprimant, les contacts serrants entre surfaces d'étanchéité.

Par "contact serrant" on entend ici un contact développant une pression de contact entre deux surfaces en contact. Plus la pression de contact est élevée, plus la pression du fluide que peut supporter le joint sans que l'étanchéité soit rompue peut être élevée. Outre la pression du fluide, laquelle peut s'exercer à l'intérieur ou à l'extérieur du joint fileté, des charges axiales de traction ou de compression peuvent modifier la pression de contact, et par conséquent les caractéristiques d'étanchéité. En d'autres termes, en raison du mode de réalisation de ces joints leur étanchéité peut ne pas être identique vis-à-vis de la pression interne ou de la pression externe, ni être stable en fonction du chargement.

Afin d'améliorer la situation, la Demanderesse a proposé, dans le document brevet FR 02/03842 (déposé le 27 mars 2002, sous priorité interne du document brevet FR 02/00055 déposé le 3 janvier 2002), un joint tubulaire d'étanchéité métal/métal muni d'un doigt (ou lèvre) annulaire, décrit dans le document WO 02/01102 et présentant des épaulements mâles et femelles inclinés, fortement serrés l'un contre l'autre après expansion, l'épaulement sur l'élément femelle étant constitué par le flanc d'une gorge, et l'épaulement sur l'élément mâle pouvant préexister ou résulter de l'impression de l'élément mâle au fond de la gorge lors de l'expansion.

Ce joint a été conçu pour être étanche à des taux d'expansion élevés, typiquement supérieurs à 10%, mais ses caractéristiques d'étanchéité avant et après expansion peuvent se révéler insuffisantes lorsque les caractéristiques d'étanchéité exigées dans les divers modes de chargement sont élevées.

L'invention a donc pour but d'améliorer la situation, notamment en termes d'étanchéité aux liquides sous haute pression avant expansion et de stabilité de l'étanchéité aux gaz haute pression, avant et après expansion, pour les divers modes de chargement.

Elle propose à cet effet un joint tubulaire expansible comprenant :
* un premier élément tubulaire comportant, d'une part, une première partie munie d'un filetage mâle, et d'autre part, une seconde partie prolongeant la première partie et comprenant i) une première surface externe, ii) une première lèvre annulaire ayant une première surface de butée axiale et une première surface interne et délimitée par ladite première surface externe sur une partie de la longueur axiale de celle-ci, et iii) une deuxième surface de butée,
* un second élément tubulaire comportant, d'une première part, un filetage femelle, homologue du filetage mâle et vissé sur celui-ci, d'une deuxième part, une seconde lèvre annulaire, ayant une troisième surface de butée en appui contre la deuxième surface de butée, une deuxième surface externe, placée en regard de la première surface interne, et une deuxième surface interne, d'une troisième part, une quatrième surface de butée axiale, et d'une quatrième part, une troisième surface interne s'étendant entre la quatrième surface de butée axiale et le filetage femelle et définissant avec les deuxième surface externe et quatrième surface de butée un logement annulaire homologue de la première lèvre.

Ce joint se caractérise par le fait que les deuxième et troisième surfaces de butée sont des surfaces coniques présentant des inclinaisons d'angles sensiblement identiques par rapport à un plan transverse à une direction longitudinale, et choisis de manière à réaliser un appui de la deuxième surface de butée contre la troisième surface de butée de nature à induire un premier contact serrant radial et étanche de l'une des premières surfaces interne et externe de la première lèvre respectivement contre la deuxième surface externe ou la troisième surface interne, et tels que, lors d'une expansion diamétrale dans le domaine de la déformation plastique effectuée ultérieurement sur le joint tubulaire expansible, la première surface externe et la troisième surface interne à définir localement un second contact serrant étanche.

De la sorte, on assure une étanchéité de qualité par coopération des première et seconde lèvres, avant comme après expansion, y compris pour des taux d'expansion diamétrale élevés (jusqu'à environ 35%).

Le joint tubulaire expansible selon l'invention peut comporter d'autres caractéristiques qui pourront être prises séparément ou en combinaison, et notamment :
- la première lèvre et le logement peuvent présenter initialement des formes choisies de sorte que le premier contact serrant ne soit induit qu'après l'appui de la deuxième surface de butée sur la troisième surface de butée,
- les inclinaisons des deuxième et troisième surfaces de butée peuvent être initialement comprises entre environ +5 ° et environ +30°,
- la courbure de la première lèvre en direction de l'axe longitudinal du joint lors de l'expansion permet de définir un contact serrant et étanche supplémentaire entre leurs première surface interne et deuxième surface externe après expansion,
- la première surface de butée peut être agencée de manière à s'appuyer contre la quatrième surface de butée et provoquer ainsi une mise en compression axiale de la première lèvre dans le domaine des déformations élastiques,
- la seconde lèvre peut comporter une deuxième surface externe présentant initialement, au niveau de sa liaison avec la troisième surface de butée, une portion annulaire inclinée par rapport à la direction longitudinale d'un angle compris entre environ 8° et environ 12°, et préférentiellement égal à environ 10°,
- la première lèvre peut comporter une première surface interne initialement inclinée par rapport à la direction longitudinale d'un angle compris entre environ 0,1° et environ 15°,
- le rapport entre l'extension de la seconde lèvre dans la direction longitudinale et l'extension du logement dans la direction transverse peut être compris entre environ 1 et environ 3, et de préférence compris entre environ 1,2 et environ 1,6,
- les filetages mâle et femelle peuvent comporter des filets munis d'un flanc porteur présentant un angle négatif compris entre environ - 3° et environ - 15 °,
- les filetages mâle et femelle peuvent comporter des filets munis d'un flanc d'engagement présentant un angle positif compris entre environ + 10° et environ + 30°, Dans ce cas, les filetages mâle et femelle peuvent présenter après vissage et avant expansion un jeu axial entre leurs flancs d'engagement compris entre environ 0,05 mm et environ 0,3 mm,
- le premier élément tubulaire peut présenter initialement au niveau de sa première surface externe et avant sa première partie, un chanfrein conique définissant un premier décrochement annulaire local vers l'intérieur, lorsque l'on se déplace vers la première partie. Dans ce cas, le chanfrein peut présenter une pente sensiblement continue par rapport à la direction longitudinale et comprise entre environ 8° et environ 12°,
- le premier élément tubulaire peut être muni d'une seconde partie présentant initialement une surépaisseur annulaire locale choisie au niveau d'une quatrième surface interne prolongeant la deuxième surface de butée en direction de la première partie, et la troisième surface interne peut comporter en un endroit choisi une gorge propre à être placée après vissage sensiblement au niveau de la surépaisseur locale. Dans ce cas, la première surface externe peut comporter après l'expansion diamétrale un épaulement annulaire qui présente une partie au moins de la conformation de la gorge et en contact serrant et étanche avec celle-ci,
- le premier élément tubulaire peut présenter initialement au niveau de sa première partie, sur sa surface interne opposée au filetage mâle, un rétreint conique dans lequel est défini un deuxième décrochement annulaire local. Dans ce cas, le rétreint peut croître initialement sensiblement continûment selon une pente par rapport à la direction longitudinale A, comprise entre environ 2° et environ 20°,
- la gorge peut comporter initialement au moins deux portions curvilignes, éventuellement séparées par une partie centrale sensiblement cylindrique. Dans ce cas, les portions peuvent présenter initialement des rayons de courbure sensiblement identiques, par exemple compris entre environ 2 mm et environ 20 mm. La gorge présente initialement une profondeur radiale dont la valeur maximale est choisie de préférence de sorte que la section de matière en fond de gorge soit supérieure au produit de la plus faible section d'une partie courante des tubes auxquels appartiennent les premier et second éléments tubulaires par l'efficacité du joint en traction. On entend par "partie courante d'un tube" la partie centrale éloignée de ses deux extrémités et de diamètre sensiblement constant,
- les filetages mâle et femelle sont préférentiellement choisis parmi les filetages de type conique et cylindrique, et sont chacun formés sur au moins une portion d'élément tubulaire.
- ledit second élément tubulaire peut appartenir à un manchon de raccordement sensiblement symétrique de type femelle/femelle et ledit premier élément tubulaire à une extrémité d'un tube de grande longueur. Le manchon peut alors comporter une partie centrale prolongée de part et d'autre par deux seconds éléments tubulaires et initialement munie sur une surface externe d'une zone annulaire présentant une sous-épaisseur choisie de sorte que l'épaisseur initiale dudit manchon au niveau de cette zone soit supérieure ou égale au produit de la section d'une partie courante des tubes, aux extrémités desquels sont formés lesdits premiers éléments tubulaires, par l'efficacité du joint,
- les surfaces coniques des deuxième et troisième surfaces de butée peuvent être respectivement convexe et concave afin d'induire le premier contact serrant radial et étanche de la première surface interne contre la deuxième surface externe. Dans ce cas, les première et seconde lèvres peuvent présenter initialement des formes choisies de sorte que la première surface de butée s'appuie sur la quatrième surface de butée avant que la deuxième surface de butée ne se soit appuyée sur la troisième surface de butée,
- en variante les surfaces coniques des deuxième et troisième surfaces de butée peuvent être respectivement concave et convexe afin d'induire le premier contact serrant radial et étanche de la première surface externe contre la troisième surface interne. Dans ce cas, la troisième surface interne du second élément tubulaire peut présenter initialement, au niveau de sa liaison avec la quatrième surface de butée, une première surface d'étanchéité présentant globalement une inclinaison d'un angle choisi par rapport à la direction longitudinale, et le premier élément tubulaire peut présenter initialement, au niveau de sa première surface externe et au niveau de sa liaison avec la première surface de butée, une seconde surface d'étanchéité présentant globalement une inclinaison d'un angle choisi par rapport à la direction longitudinale, de sorte que lors du vissage les première et seconde surfaces d'étanchéité soient serrées radialement l'une contre l'autre en induisant un troisième contact serrant étanche. Les première et seconde surfaces d'étanchéité peuvent être alors agencées pour que le premier contact serrant étanche soit induit entre elles après le troisième contact serrant étanche, de manière à renforcer ce dernier,
- les angles choisis des première et seconde surfaces d'étanchéité peuvent être initialement compris entre environ +1° et environ +30° (un angle nul pour l'une des deux surfaces d'étanchéité est également envisageable),
- l'une au moins des première et seconde surfaces d'étanchéité peut être une surface conique
ou une surface bombée (présentant éventuellement une portion de type torique),
- la première surface d'étanchéité peut être définie par un troisième décrochement annulaire local vers l'intérieur de la troisième surface interne,
- la seconde surface d'étanchéité peut être définie par un quatrième décrochement annulaire local vers l'intérieur de la première surface externe.

L'invention concerne également un procédé de réalisation d'un joint tubulaire expansé à partir d'un joint tubulaire expansible du type de celui présenté ci-avant.

Ce procédé consiste à partir du joint tubulaire expansible précité, puis i) à visser les premier et second éléments tubulaires jusqu'à ce que la première lèvre soit logée dans le logement annulaire, et que la deuxième surface de butée s'appuie contre la troisième surface de butée de manière à serrer radialement, à étanchéité en formant un premier contact serrant radial et étanche, l'une des premières surfaces interne et externe de la première lèvre respectivement contre la deuxième surface externe ou la troisième surface interne, et ii) à faire subir au j oint tubulaire expansible, à l'aide d'un outil d'expansion à déplacement axial, une expansion diamétrale dans le domaine de la déformation plastique, de manière à contraindre la première surface externe et la troisième surface interne à définir localement un second contact serrant et étanche.

Dans ce procédé, on peut partir de première et seconde lèvres présentant initialement des formes choisies de sorte que le premier contact serrant soit établi entre les première surface interne et deuxième surface externe, et que le premier contact serrant ne soit induit qu'après l'appui de la deuxième surface de butée sur la troisième surface de butée.

Par ailleurs, lorsque les surfaces coniques des deuxième et troisième surfaces de butée sont respectivement convexe et concave le vissage peut tout d'abord contraindre la première surface de butée à s'appuyer contre la quatrième surface de butée de manière à provoquer une mise en compression axiale de la première lèvre dans le domaine des déformations élastiques.

En variante, lorsque les surfaces coniques des deuxième et troisième surfaces de butée sont respectivement concave et convexe, le vissage peut contraindre les première et seconde surfaces d'étanchéité à se serrer radialement l'une contre l'autre en induisant d'abord le troisième contact serrant étanche puis le premier contact serrant étanche qui vient renforcer le troisième contact serrant étanche. Par ailleurs, l'expansion peut induire un quatrième contact serrant étanche entre une extrémité libre de la première surface interne et la deuxième surface externe.

Un tel procédé est particulièrement bien adapté, bien que de façon non limitative, à l'expansion radiale du joint selon un taux d'expansion au moins égal à 10%.

D'autres caractéristiques et avantages de l'invention apparaîtront à l'examen de la description détaillée ci-après, et des dessins annexés, sur lesquels :
- la figure 1 illustre de façon schématique, dans une vue en coupe longitudinale, une partie d'un exemple de réalisation d'un joint fileté expansible selon l'invention,
- la figure 2 illustre de façon schématique, dans une vue en coupe longitudinale, une partie d'un filetage femelle conique et du filetage mâle conique homologue avant vissage et expansion,
- la figure 3 illustre de façon schématique, dans une vue en coupe longitudinale, une partie de l'extrémité mâle du premier tube du joint fileté expansible de la figure 1,
- la figure 4 illustre de façon schématique, dans une vue en coupe longitudinale, une partie de l'extrémité femelle du second tube du joint fileté expansible de la figure 1,
- la figure 5 illustre de façon schématique, dans une vue en coupe longitudinale, les forces générées sur les extrémités mâle et femelle des tubes des figures 3 et 4 pendant la première étape de vissage,
- la figure 6 illustre de façon schématique, dans une vue en coupe longitudinale, les forces générées sur les extrémités mâle et femelle des tubes des figures 3 et 4 pendant la seconde étape de vissage,
- la figure 7 illustre de façon schématique, dans une vue en coupe longitudinale, les forces générées sur les extrémités mâle et femelle des tubes des figures 3 et 4 pendant l'étape d'expansion par déformation plastique,
- la figure 8 illustre de façon schématique, dans une vue en coupe longitudinale, les déformations subies par les extrémités mâle et femelle des tubes des figures 3 et 4 après l'étape d'expansion,
- la figure 9 illustre de façon schématique, dans une vue en coupe longitudinale, une partie d'un exemple de réalisation d'un assemblage de deux joints filetés expansibles selon l'invention, disposés symétriquement,
- la figure 10 illustre de façon schématique, dans une vue en coupe longitudinale, une partie d'un autre exemple de réalisation d'extrémité mâle d'un premier tube d'un joint fileté expansible selon l'invention,
- la figure 11 illustre de façon schématique, dans une vue en coupe longitudinale, une partie d'un autre exemple de réalisation d'extrémité femelle d'un second tube d'un joint fileté expansible selon l'invention, et
- la figure 12 illustre de façon schématique, dans une vue en coupe longitudinale, les positions relatives des extrémités mâle et femelle des tubes des figures 10 et 11 après la phase de vissage.

Les dessins annexés pourront non seulement servir à compléter l'invention, mais aussi contribuer à sa définition, le cas échéant.

L'invention concerne un joint tubulaire fileté étanche, pouvant être notamment utilisé dans un puits d'hydrocarbures ou dans un puits similaire tel qu'un puits géothermique, et le procédé de réalisation associé.

Comme indiqué dans l'introduction, un j oint tubulaire fileté selon l'invention peut permettre de constituer des colonnes de tubes de cuvelage ou de production, par assemblage de tubes métalliques de grande longueur entre eux ou bien de tubes de grande longueur et de manchons.

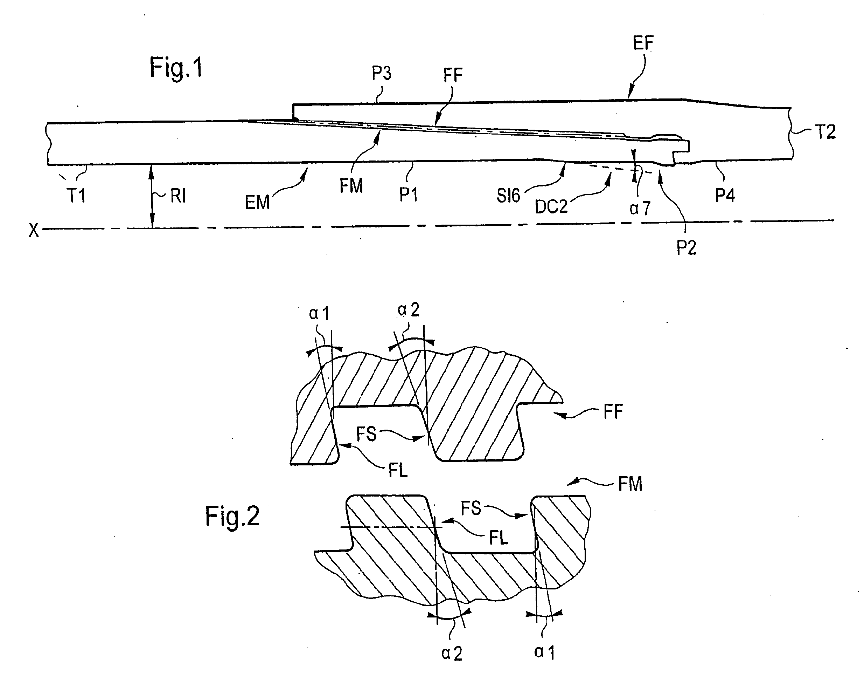

On se réfère tout d'abord aux figures 1 à 8 pour décrire un premier exemple de réalisation d'un joint selon l'invention. Dans cet exemple, comme cela est partiellement illustré sur la figure 1, le joint permet de connecter deux tubes T1 et T2, d'axe de révolution XX et de grande longueur, c'est-à-dire de plusieurs mètres de longueur, et plus précisément l'extrémité de type mâle EM (ou élément tubulaire mâle) d'un premier tube T1 et l'extrémité de type femelle EF (ou élément tubulaire femelle) d'un second tube T2. Dans le mode de réalisation illustré, les tubes T1 et T2 présentent par exemple une partie courante dont le diamètre extérieur initial est égal à environ 193,68 mm (ou 7" 5/8). La partie courante d'un tube est la partie centrale éloignée de ses deux extrémités et de diamètre sensiblement constant.

Comme cela est illustré sur la figure 1, l'extrémité mâle EM d'un tube T1 comporte deux parties P1 et P2. La première partie P 1 prolonge la partie centrale du tube T1 et est pourvue d'un filetage mâle externe FM, de préférence de type conique, mais il pourrait être également de type cylindrique.

Par exemple, comme illustré sur la figure 2 on prévoit un filetage conique dont la conicité ΔD/D, où D est le diamètre, est de 10%. Par ailleurs, le jeu axial (ou longitudinal) entre les filets est initialement suffisamment important pour leur offrir une certaine liberté de déplacement lors de l'expansion diamétrale, sur laquelle on reviendra plus loin. Par exemple, le jeu axial entre les flancs d'engagement (ou "flanc stabbing") FS des filets des filetages mâle FM et femelle FF est compris entre environ 0,05 mm et environ 0,3 mm, et plus préférentiellement encore entre environ 0,05 mm et environ 0,25 mm.

En outre, afin d'assurer une bonne tenue en traction, mais surtout en compression, et par conséquent de diminuer les risques de désengagement ou dégrainage des filets mâle et femelle avant, pendant et après l'expansion, le flanc porteur (ou "flanc loading") FL des filets est par exemple incliné par rapport à la direction radiale d'un angle négatif α1 compris entre environ - 3 ° et environ - -15° et plus préférentiellement égal à environ - -10°, tandis que le flanc d'engagement FS des filets est par exemple incliné par rapport à la direction radiale d'un angle positif α2 compris entre environ + 10° et environ + 30°, et plus préférentiellement égal à environ +15°.

L'angle négatif α1 permet d'éviter le désengagement ou dégrainage des filets en prise, notamment sous traction. Par ailleurs, plus l'angle positif α2 est grand, plus l'engagement des filets est facile, mais plus la tenue à la compression est dégradée.

Il est important de noter que les filetages mâle FM et femelle FF peuvent être chacun formés sur au moins une portion d'élément tubulaire EM, EF. En d'autres termes, ils peuvent être réalisés en une ou plusieurs parties. Lorsqu'ils sont constitués de deux parties celles-ci peuvent être éventuellement formées sur deux surfaces radialement distinctes ou alternativement sur une même surface.

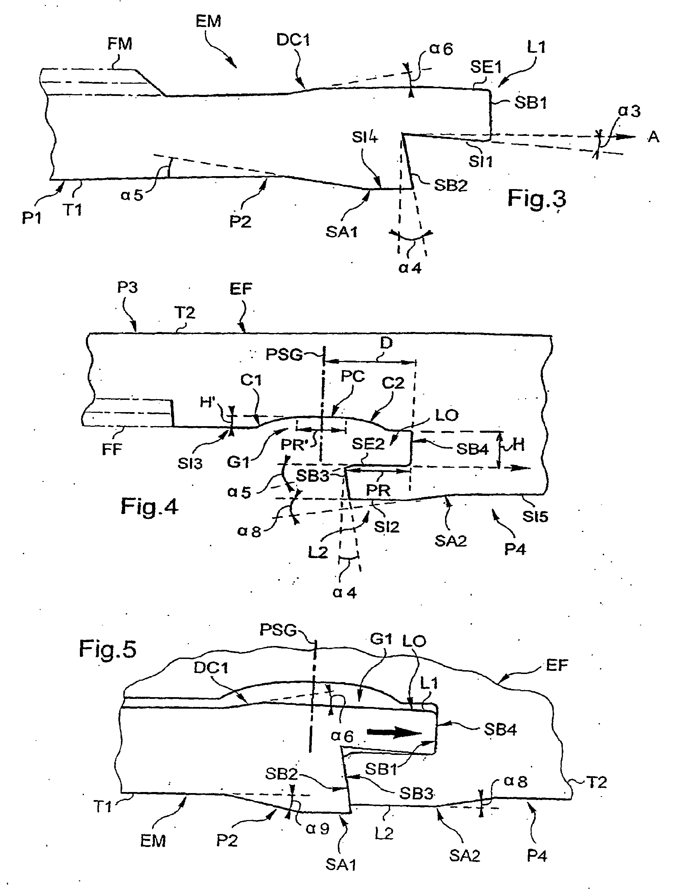

La seconde partie P2 prolonge la première partie P 1 à l'extrémité du tube T1. Elle comprend tout d'abord, comme illustré sur la figure 3, une première lèvre annulaire (ou doigt annulaire) L1 comprenant une première surface de butée axiale SB1, initialement sensiblement plane et perpendiculaire à la direction longitudinale A du tube T1 (parallèle à XX), une première surface interne SI1, prolongeant initialement de façon sensiblement perpendiculaire la première surface de butée axiale SB1 en direction de la première partie P1 et orientée vers l'intérieur du tube T1 (c'est-à-dire du côté opposé au filetage mâle FM), et une portion d'une première surface externe SE1, prolongeant également la première surface de butée axiale SB1 en direction de la première partie P1 et orientée vers l'extérieur du tube T1. La première surface externe SE1 de la seconde partie P2 de l'élément mâle EM s'étend de la première surface de butée SB1 jusqu'au niveau du filetage mâle FM. La seconde partie P2 comprend en outre une deuxième surface de butée SB2 prolongeant la première surface interne SI1 et prolongée par une (quatrième) surface interne SI4 au moins en partie cylindrique et destinée à être au contact du fluide (ou gaz) circulant dans le tube T1. Les première surface de butée axiale SB1, première surface interne SI1 et deuxième surface de butée SB2 définissent ce que l'homme de l'art appelle une "feuillure mâle".

Comme cela est illustré sur la figure 3, la première surface interne SI1 peut être inclinée d'un angle α3 choisi par rapport à la direction longitudinale A du tube T1, pour une raison qui sera évoquée plus loin. Elle forme ainsi initialement une surface conique. L'angle d'inclinaison est de préférence compris entre environ 0,1 et environ 15°, et plus préférentiellement égal à environ 2,5 °. Par ailleurs, comme illustré, la première surface externe SE1 peut être légèrement bombée, et plus précisément torique de grand rayon, par exemple entre 20 mm et 100 mm, afin de faciliter son impression dans une gorge G1, comme on le verra plus loin.

Comme cela est illustré sur la figure 4, l'extrémité femelle EF d'un tube T2 comporte également deux parties P3 et P4. La première partie P3, placée la plus à l'extrémité du tube T2, est pourvue d'un filetage femelle interne FF, homologue du filetage mâle FM.

La seconde partie P4 prolonge la première partie P3 vers la partie centrale du tube T2. Elle comprend tout d'abord une seconde lèvre annulaire (ou doigt annulaire) L2 comprenant une troisième surface de butée SB3, une deuxième surface externe SE2, orientée vers l'extérieur du tube T2, prolongeant la troisième surface de butée SB3 dans une direction opposée à la première partie P3 et destinée à être placée en regard de la première surface interne SI1, et une deuxième surface interne SI2 au moins en partie cylindrique, orientée vers l'intérieur du tube T2 et prolongeant également la troisième surface de butée SB3 dans une direction opposée à la première partie P3.

Elle comprend en outre une quatrième surface de butée axiale SB4, initialement sensiblement plane et perpendiculaire à la direction longitudinale A du tube T2, et une troisième surface interne SI3 en partie cylindrique, orientée vers l'intérieur du tube T2 et prolongeant la quatrième surface de butée axiale SB4 en direction de la première partie P3. Une partie de la troisième surface interne SI3 définit conjointement avec les deuxième surface externe SE2 et quatrième surface de butée SB4 un logement (ou rainure) annulaire LO homologue de la première lèvre L1 de manière à la recevoir lors de la phase de vissage des tubes T1 et T2, sur laquelle on reviendra plus loin.

Le logement LO s'étend sur une longueur axiale choisie PR, égale à celle de la seconde lèvre L2, et suivant une profondeur radiale choisie H (perpendiculaire à la direction longitudinale A). Préférentiellement, le rapport PR/H est compris entre environ 1 et environ 3, et plus préférentiellement entre environ 1,2 et environ 1,6. Il est encore plus préférentiellement égal à environ 1,5. Par exemple, PR est égal à 4 mm et H est égal à 2,7 mm, ce qui fournit un rapport PR/H sensiblement égal à 1,5. Comme on le verra plus loin, ces deux dimensions PR et H sont choisies de manière à permettre une déformation choisie de la première lèvre L1 et de la zone à la racine de celle-ci.

Les troisième surface de butée SB3, deuxième surface externe SE2 et quatrième surface de butée axiale SB4 définissent ce que l'homme de l'art appelle une "feuillure femelle".

Une gorge annulaire G1 est par ailleurs définie dans une partie au moins de la troisième surface interne SI3. Elle comporte initialement, de préférence, une partie centrale PC sensiblement cylindrique et prolongée de part et d'autre par deux portions curvilignes PC1 et PC2. Ces portions curvilignes C1 et C2 présentent initialement, de préférence, des rayons de courbure sensiblement identiques, compris de préférence entre environ 2 mm et environ 20 mm. Mais, cette gorge G1 pourrait ne comporter que deux portions curvilignes.

Par exemple, la gorge G1 comprend une partie centrale PC qui s'étend sur une longueur axiale PR' égale à environ 2 mm, une profondeur radiale H' égale à environ 1 mm, et des portions curvilignes C1 et C2 qui présentent un rayon de courbure égal à environ 5 mm. La profondeur radiale H' de la gorge G1 est généralement limitée par l'épaisseur du tube T2, au niveau du plan de symétrie PSG de ladite gorge, laquelle ne doit pas être inférieure à une épaisseur minimale servant au calcul de la section critique du joint fileté. Plus précisément, la valeur maximale de la profondeur radiale H' est choisie de sorte que la section droite de matière en fond de gorge G1 soit supérieure au produit de la section du tube T1 ou T2 dans sa partie courante (ou de la plus faible de ces deux sections si elles sont différentes) par l'efficacité du joint en traction. Le rapport entre la section critique des éléments filetés et la section de tube (T1, T2) caractérise l'efficacité de la connexion (ou du joint), laquelle est avec la section du tube une donnée d'entrée de la conception d'une colonne tubulaire.

Dans cette configuration, le plan de symétrie PSG de la gorge G1 est placé à une distance axiale choisie D de la quatrième surface de butée axiale SB4 qui définit le fond du logement (ou rainure) LO. Par exemple, avec les valeurs précitées, la distance D est égale à environ 5,61 mm. Par ailleurs, après vissage, la partie centrale PC de la gorge G1 est sensiblement placée à l'aplomb de la surépaisseur SA1.

Comme on le verra plus loin, le rayon de courbure (notamment du côté du filetage), la profondeur radiale H', la longueur axiale PR et la profondeur radiale H sont choisis de manière à permettre la déformation choisie de la première lèvre L1 et de la zone de la seconde partie P2 à la racine de celle-ci.

La seconde partie P4 comprend également une autre (cinquième) surface interne SIS cylindrique prolongeant la deuxième surface de butée SB2 dans la direction opposée à la première partie P3 (c'est-à-dire en direction de la partie centrale du tube T2) et destinée à être au contact du fluide (ou gaz) circulant dans le tube T2.

Selon l'invention, la deuxième surface de butée SB2 et la troisième surface de butée SB3 possèdent initialement des surfaces coniques présentant des inclinaisons d'angles α4 choisis par rapport à un plan perpendiculaire à la direction longitudinale A, sensiblement identiques. Dans ce premier mode de réalisation, les surfaces coniques des deuxième surface de butée SB2 et troisième surface de butée SB3 sont respectivement convexe et concave.

Préférentiellement, comme illustré sur les figures 3 et 4, les deuxième SB2 et troisième SB3 surfaces de butée présentent sensiblement une même inclinaison initiale. On entend ici par "inclinaisons sensiblement égales" des inclinaison égales entre elles, à environ ±5° près. Cette inclinaison commune est préférentiellement comprise entre un angle α4 d'environ +5° et un angle α4 d'environ +30°. Elle est plus préférentiellement encore égale à environ 10°.

Cette inclinaison permet, lorsque la deuxième surface de butée SB2 s'appuie contre la troisième surface de butée SB3 pendant la phase de vissage, de pré-contraindre radialement la première lèvre L1 en direction de l'axe du joint et donc de serrer radialement, et de façon étanche, sa première surface interne SI1 contre la deuxième surface externe SE2 de la seconde lèvre L2 (en raison de leurs formes respectives choisies), définissant ainsi un premier contact serrant étanche à composante radiale.

La constitution d'un joint tubulaire expansé selon l'invention s'effectue par la mise en oeuvre d'un procédé comportant les étapes suivantes.

Dans une première étape illustrée sur la figure 5, on visse l'extrémité, par exemple mâle EM, de l'un des tubes, par exemple T1, sur l'extrémité, par exemple femelle EF, de l'autre tube, par exemple T2, jusqu'à ce que la première surface de butée axiale SB1 1 de la première lèvre L1 s'appuie sur la quatrième surface de butée axiale SB4 du logement (ou rainure) LO.

Afin de faciliter ce vissage, et comme illustré sur la figure 4, la deuxième surface externe SE2 de la seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique. Préférentiellement, cette inclinaison est initialement comprise entre un angle d'environ +8° et un angle d'environ +12°. Plus préférentiellement encore, elle est égale à environ 10°. Une telle inclinaison permet de faciliter la pénétration de la première lèvre L1 dans le logement (ou rainure) LO, notamment dans le cas d'interférences accidentelles, ce qui permet de diminuer les éventuels risques de grippage ou d'endommagement de la première lèvre L1, et notamment de l'arête d'extrémité de sa première surface interne SI1. Une telle interférence peut en effet survenir entre les première surface interne SI1 et deuxième surface externe SE2 avant que la deuxième surface de butée SB2 ne s'appuie sur la troisième surface de butée SB3.

Puis, dans une deuxième étape on poursuit le vissage jusqu'à ce que la deuxième surface de butée SB2 de la première lèvre L1 s'appuie sur la troisième surface de butée SB3 de la seconde lèvre L1. La poursuite du vissage, après la mise en butée de la première surface de butée SB1 sur la quatrième surface de butée SB4, permet d'initier l'emmagasinement d'énergie potentielle élastique dans la première lèvre L1, en mettant celle-ci en compression axiale.

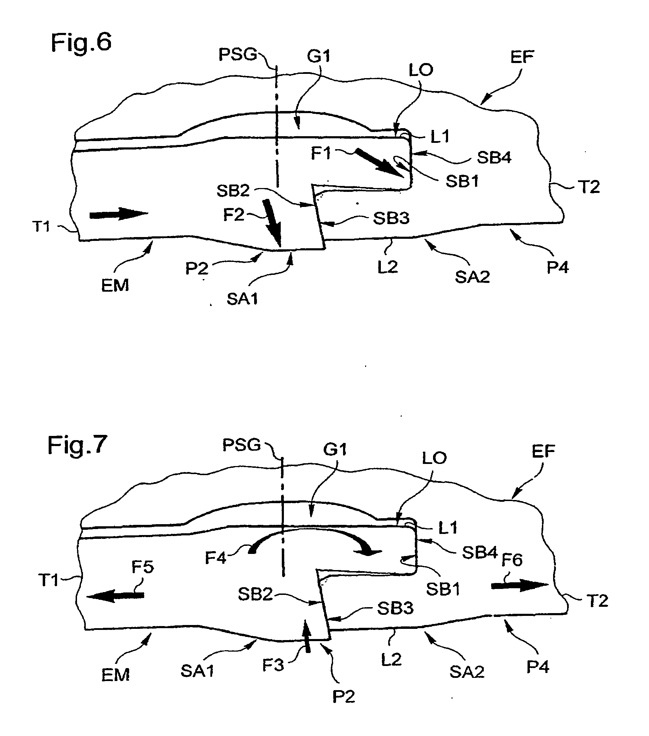

Dans une troisième étape illustrée sur la figure 6, on poursuit encore le vissage afin de pré-contraindre radialement la première lèvre L1 en direction de l'axe du joint, grâce à l'inclinaison (ou pente) des deuxième SB2 et troisième SB3 surfaces de butée SB3 des première L1 et seconde L2 lèvres, et à la coopération des première SB1 et quatrième SB4 surfaces de butée axiales. Cette précontrainte est matérialisée par les flèches F1 et F2 sur la figure 6.

Le contact entre les différentes surfaces de butée et les deux lèvres est ainsi notablement renforcé, ce qui permet d'assurer l'étanchéité du j oint avant l'étape d'expansion diamétrale. On obtient ainsi, avant expansion, une excellente étanchéité aux fluides sous pression interne, y compris en présence de forces de traction ou de compression axiale.

Dans une quatrième étape, on introduit axialement dans l'un des tubes T1 et T2 un outil d'expansion diamétrale, comme par exemple un boulet à tête conique dont le diamètre maximal est supérieur au diamètre interne initial DI des tubes T1 et T2 (égal à 2 fois le rayon interne RI matérialisé sur la figure 1) et est sensiblement égal à leur diamètre interne final. Le choix de la direction d'introduction ne revêt pas une réelle importance. Par conséquent, le boulet peut être déplacé axialement d'une extrémité mâle EM vers une extrémité femelle EF, ou inversement.

Le déplacement du boulet s'effectue de manière connue de l'homme de l'art (voir notamment les documents US 6,604,763 et WO 03/071086), par exemple par traction à l'aide de tiges de forage ou bien en exerçant une pression hydraulique. Le boulet a par exemple une forme cylindro-conique avec une partie conique d'entrée chargée d'effectuer l'expansion et prolongée par une partie cylindrique médiane. Mais, sa forme peut être également sphérique ou biconique (partie conique d'entrée prolongée par une partie cylindrique, elle-même prolongée par une partie conique de sortie). Les rayons de raccordement de ces trois parties du boulet sont choisis en fonction des besoins.

D'autres outils d'expansion peuvent être utilisés à la place des boulets, comme par exemple un outil d'expansion rotatif à trois rouleaux réalisant une expansion mécanique. Ces outils d'expansion (y compris les boulets) et leurs modes d'utilisation sont notamment décrits dans les documents brevets WO 02/081863, US 6,457,532 et US 2002/0139540.

L'expansion diamétrale s'effectue dans le domaine des déformations plastiques. Les déformations plastiques générées augmentant la limite d'élasticité des éléments tubulaires, on doit par conséquent utiliser des métaux supportant de telles déformations. Par exemple, un tube présentant initialement une limite d'élasticité de 310 MPa (45 KSI) voit cette limite passer à 380 MPa (55 KSI) après expansion.

Lorsque le boulet parvient au niveau de la quatrième surface interne SI4 de la seconde partie P2 de l'extrémité mâle EM et de la cinquième surface interne SI5 de la seconde partie P4 de l'extrémité femelle EF, la matière expansée contraint la première lèvre L1 à se déformer dans la gorge G1. Les déformations subies par le j oint pendant l'expansion sont matérialisées par les flèches F3 à F6 sur la figure 7.

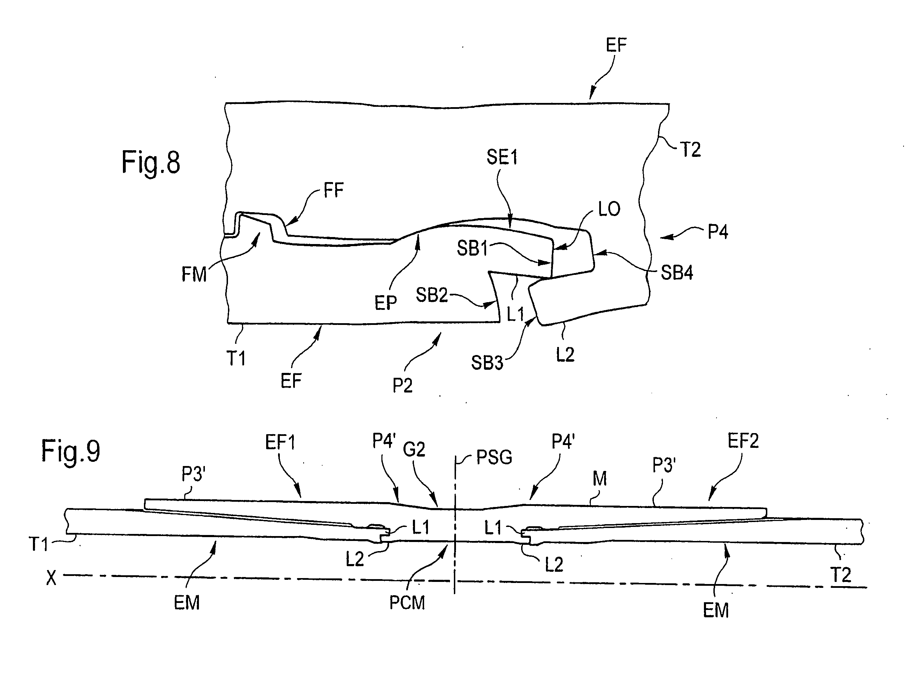

Plus précisément, la première lèvre L1 est contrainte de se courber (flèche F4) et de prendre au moins en partie la forme de la gorge G1. Il se crée alors, comme illustré sur la figure 8, au niveau de la première surface externe SE1 de l'extrémité mâle EM, juste avant la première lèvre L1, un épaulement ou talon annulaire EP qui permet de créer une zone d'étanchéité par contacts serrants de type "métal sur métal".

L'épaulement EP et l'étanchéité peuvent être renforcés par la présence d'une surépaisseur annulaire locale SA1 en direction de l'intérieur du tube T1, au niveau de la quatrième surface interne SI4 et au voisinage de la deuxième surface de butée SB2. Préférentiellement, comme illustré sur les figures 3 et 5 à 7, cette surépaisseur SA1 est sensiblement constante dans la zone d'extension de la partie centrale PC de la gorge G1, puis elle décroît. Cette décroissance est préférentiellement sensiblement continue en direction de la première partie P 1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

La surépaisseur maximale au niveau de la zone d'épaisseur constante définit un diamètre intérieur minimal de l'élément mâle EM. Ce diamètre intérieur doit être supérieur au diamètre d'un tampon (appelé "drift" par l'homme du métier). Le tampon (ou drift) est un outil qui est introduit à l'intérieur des tubes, avant de les descendre dans les puits, afin de s'assurer qu'ils disposent d'un diamètre libre intérieur minimal garantissant le passage d'outils dans la colonne sans risque d'accrochage. Lorsqu'elle demeure inférieure à la valeur mentionnée ci-avant, la valeur optimale de la surépaisseur est alors fixée par la quantité de matière nécessaire pour faire monter au maximum la première lèvre L1 dans le fond de la gorge G1 lors de l'expansion afin qu'elle se déforme conformément aux besoins. Par exemple cette surépaisseur est égale à environ 0,8 mm.

Cette surépaisseur SA1 offre un surplus de matière qui permet de combler l'espace vide de la gorge G1, et par conséquent permet à la première lèvre L1 et la zone située juste avant celle-ci de prendre la conformation d'une partie au moins de ladite gorge G1, et donc de présenter sensiblement la déformation recherchée.

La déformation génère, comme indiqué ci-avant, l'épaulement ou talon annulaire EP, au niveau de la première surface externe SE1 de l'extrémité mâle EM, avant la première lèvre L1, qui permet de créer une zone d'étanchéité par contacts serrants de la manière indiquée ci-dessous.

L'expansion effectuée par le boulet se traduit, du fait du diamètre de l'élément femelle EF plus grand que celui de l'élément mâle EM, par un taux d'expansion de l'élément mâle EM plus grand que celui de l'élément femelle EF.

Il s'en suit, du fait de la conservation de la matière, une contraction de l'élément mâle EM plus importante que celle de l'élément femelle EF, ce qui se traduit par un déplacement relatif axial de ces deux éléments dans le sens d'un dégagement matérialisé par les flèches F5 et F6 de la figure 7. Ce déplacement vient serrer fortement l'un contre l'autre les épaulements inclinés EP, créant l'étanchéité visée. On peut noter que la pression de contact ou serrage est encore renforcée lorsque le joint expansé est soumis à des efforts de traction axiale.

En raison du désengagement axial lors de l'expansion, les longueurs axiales des première L1 et seconde L2 lèvres doivent être choisies de façon précise. En effet, si la première lèvre L1 est trop courte, elle risque de sortir de son logement LO et donc de plonger vers l'axe du joint, supprimant ainsi l'étanchéité après expansion. Si la seconde lèvre L2 est trop longue, le logement LO est difficile à usiner.

La courbure de la première lèvre L1 lors de l'expansion, favorisée par la forme de la gorge G1 et la surépaisseur SA1, se traduit par un second contact serrant entre la partie interne de l'extrémité de la première lèvre L1 et la deuxième surface externe SE2.

La première lèvre L1 est alors arc-boutée et coincée entre l'épaulement constitué dans la paroi de la gorge G1 et la deuxième surface externe SE2. Un tel double contact permet d'assurer une excellente étanchéité, stable pour les différents modes de chargement possibles, comprenant tant la pression intérieure qu'extérieure combinée ou non à des efforts de traction ou de compression axiale.

Afin de favoriser encore plus la courbure de la première lèvre L1 et de renforcer encore le contact entre l'épaulement ou talon EP et la gorge G1, on peut prévoir, comme illustré sur les figures 3 et 5 à 7, un décrochement DC1 vers l'intérieur du tube T1, au niveau de la première surface externe SE1 et avant la première partie P1. Ce décrochement DC1 est préférentiellement sensiblement continu. Il constitue ainsi initialement un chanfrein conique. Il peut par exemple se faire selon un angle α6 par rapport à la direction longitudinale A, compris entre environ 8° et environ 12°, et plus préférentiellement égal à environ 10°. Par exemple, ce décrochement DC1 débute à une distance de la première surface de butée axiale SB 1 (suivant la direction longitudinale A) égale à environ 7,8 mm.

Par ailleurs, afin de disposer de matière là où elle est nécessaire, le tube T1 peut subir au niveau de ses première P1 et seconde P2 parties, et avant usinage de l'élément mâle EM, un rétreint conique de demi-angle au sommet α7, le diamètre du cône allant en diminuant lorsque l'on se dirige vers l'extrémité libre de l'élément mâle EM.

Ce rétreint permet d'augmenter l'épaisseur de matière au niveau de la seconde partie P2 et de loger la surépaisseur SA1. Après usinage de l'élément mâle EM et notamment de la surépaisseur SA1, la trace du rétreint se traduit par un décrochement annulaire local DC2 vers l'intérieur du tube lorsque l'on se dirige vers l'extrémité libre de l'élément mâle EM.

Pour ne pas gêner la progression du boulet dans le tube T1, le rétreint est préférentiellement sensiblement continu et l'angle α7 compris entre environ 2° et environ 20°, et plus préférentiellement égal à environ 5°.

Lorsque la première surface interne SI1 de la première lèvre L1 présente une inclinaison (par exemple d'environ 2,5°), cela permet à la seconde lèvre L2 d'être placée plus près de l'extérieur du tube T2. Par conséquent, lorsque le boulet parvient au niveau de la seconde lèvre L2, celle-ci peut se rapprocher de l'extérieur du tube T2. En outre, cela permet de limiter l'effet dit "banane" qui tend à faire tomber la seconde lèvre L2 vers l'intérieur de la cavité du tube T2.

Ce rapprochement peut être accentué par la présence d'une surépaisseur annulaire locale SA2 en direction de l'intérieur du tube T2, au niveau de la deuxième surface interne SI2 de la seconde lèvre L2 et au voisinage de la troisième surface de butée SB3. Préférentiellement, comme illustré sur les figures 4 à 7, cette surépaisseur SA2 est sensiblement constante dans la zone d'extension de la seconde lèvre L2, puis elle décroît. Cette décroissance est préférentiellement sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°.

Cette surépaisseur SA2 dépend préférentiellement de la surépaisseur SA1 et est plus préférentiellement encore inférieure à celle-ci. Elle est de toute façon inférieure à une valeur maximale définie par le diamètre du tampon (ou "drift"). Par exemple, cette surépaisseur SA2 est comprise entre environ 0,3 mm et 0,8 mm, et de préférence égale à environ 0,5 mm. Le décalage initial offert par des surépaisseurs SA1 et SA2 différentes permet de favoriser la déformation finale, notamment de la première lèvre L1. Ce décalage ne doit cependant pas être trop important car il pourrait annuler l'effet précité offert par l'inclinaison de la première surface interne SI1 de la première lèvre L1 (lorsqu'elle existe).

Comme mentionné précédemment, le résultat de l'expansion induite par le passage du boulet est illustré sur la figure 8. Il est important de noter que dans les joints manchonnés (et non pas dans les joints intégraux), du fait que l'expansion provoque un désengagement axial, les déformations des première L1 et seconde L2 lèvres peuvent ne pas être totalement identiques aux deux extrémités opposées du manchon. Cette différence (ou dissymétrie) est cependant moindre que celle survenant dans les joints manchonnés décrits dans le document FR 02/03842.

Il est également important de noter que le retour élastique des éléments du joint fileté après le passage du boulet est négligeable devant les déformations plastiques mises en jeu.

On se réfère maintenant à la figure 9 pour décrire un exemple de réalisation d'un assemblage de deux oints selon l'invention, disposés symétriquement. Dans cet exemple, les deux joints permettent de connecter deux tubes T1 et T2 de grandes longueurs par l'intermédiaire d'un élément tubulaire de type manchon de raccordement M. Ce manchon M est ici de forme symétrique par rapport à un plan de symétrie PSM perpendiculaire à la direction longitudinale A des tubes T1 et T2. Il est par ailleurs de type femelle/femelle.

Un tel manchon M comprend une partie centrale PCM prolongée de part et d'autre par deux premières parties P3' et deux secondes parties P4', du même type que les première (P3) et seconde (P4) parties de l'extrémité femelle EF du tube T2 présenté ci-avant. Par conséquent, tout ce qui a été dit à propos des première (P3) et seconde (P4) parties de l'extrémité femelle du tube T2 s'applique également aux premières parties P3' et secondes parties P4' du manchon M.

Comme cela est illustré, la partie centrale PCM du manchon M comporte préférentiellement une gorge annulaire G2 (également appelée "lunule") définissant localement une sous-épaisseur centrée sur le plan de symétrie PSM.

Cette lunule G2 permet de réduire l'épaisseur du manchon M dans sa partie la plus épaisse et donc de diminuer les pressions et les forces d'expansion. En outre, elle permet de mieux contrôler les déformations au niveau des différentes surfaces de butée (SB 1 à SB4) et portées tout en offrant au j oint un aspect sensiblement rectiligne (en surface de révolution extérieure) après expansion. L'épaisseur du manchon M au niveau de son plan de symétrie PSM doit donc être choisie supérieure ou égale au produit de la section de la partie courante des tubes T1 et T2, aux extrémités desquels sont formés les premiers éléments tubulaires, par l'efficacité du j joint.

Préférentiellement, la lunule s'étend sensiblement entre les deux troisièmes surfaces de butée axiale SB3 des deux secondes lèvres L2 opposées. Mais, elle peut s'étendre sur une distance plus importante, notamment entre les derniers filets des deux filetages femelle FF. Les derniers filets sont ici ceux qui sont du côté des troisièmes surfaces de butée SB3.

Par ailleurs, cette lunule G2 peut être en forme de cuvette munie d'une partie centrale présentant la sous-épaisseur maximale (au niveau du plan de symétrie PSM) et de parois latérales inclinées selon un angle de préférence inférieur à environ 30°, et plus préférentiellement égal à environ 15°.

Il est important de noter que la lunule (et donc la gorge G2) n'est pas forcément symétrique par rapport au plan PSG. Elle peut en effet présenter deux parties dissymétriques de part et d'autre du plan PSG.

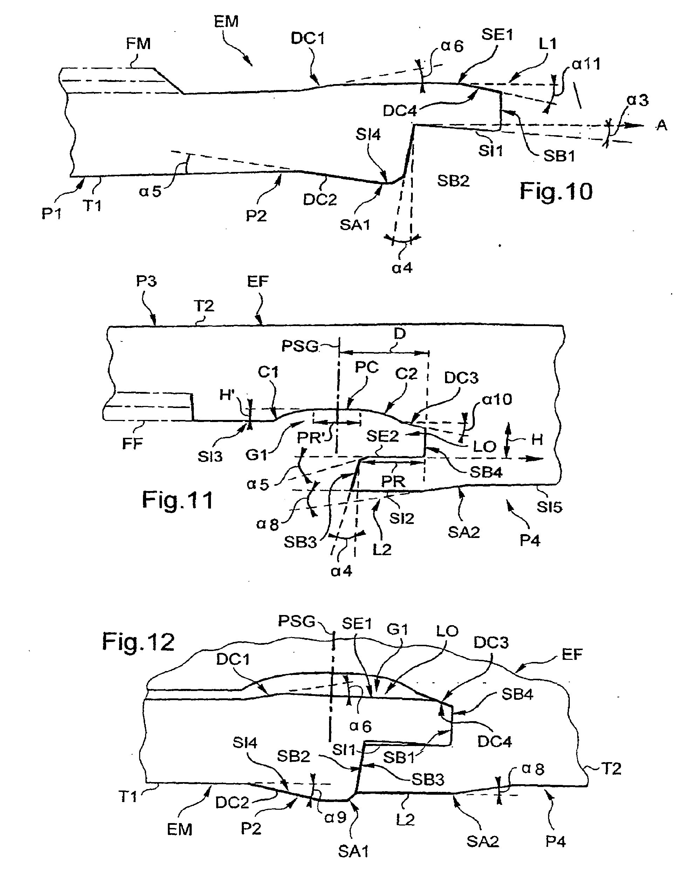

On se réfère maintenant aux figures 10 à 12 pour décrire un autre exemple de réalisation d'un joint tubulaire expansible selon l'invention.

Cet exemple de réalisation comporte de nombreuses similitudes avec celui précédemment décrit en référence aux figures 1 à 8. Par conséquent, leurs éléments communs portent des références identiques. En outre, les éléments de formes sensiblement identiques et assurant des fonctions sensiblement identiques ne seront pas de nouveau décrits.

Par ailleurs, cet exemple de réalisation, tout comme le précédent, concerne non seulement les joints permettant de connecter l'extrémité de type mâle EM (ou élément tubulaire mâle) d'un premier tube T1, de grande longueur et d'axe de révolution XX, et l'extrémité de type femelle EF (ou élément tubulaire femelle) d'un second tube T2, également de grande longueur et d'axe de révolution XX, mais également les assemblages de deux joints disposés symétriquement, décrits ci-avant en référence à la figure 9 et permettant de connecter deux tubes T1 et T2 de grandes longueurs par l'intermédiaire d'un élément tubulaire de type manchon de raccordement M.

Ce qui différencie cet exemple de réalisation du précédent, c'est principalement le détail de réalisation des deuxième SB2 et troisième SB3 surfaces de butée, ainsi qu'éventuellement le détail de réalisation des première surface externe SE 1 et troisième surface interne SI3, des premier EM et second EF éléments tubulaires, qui permettent de réaliser les premières et troisièmes étanchéités (ou contacts serrant), avant expansion.

La deuxième surface de butée SB2 et la troisième surface de butée SB3 possèdent toujours initialement des surfaces coniques présentant des inclinaisons d'angles α4 choisis par rapport à un plan perpendiculaire à la direction longitudinale A, sensiblement identiques. Mais, dans ce second exemple de réalisation, les surfaces coniques des deuxième surface de butée SB2 et troisième surface de butée SB3 sont respectivement concave et convexe.

Les inclinaisons des angles α4 sont choisies de sorte que la deuxième surface de butée SB2 s'appuie contre la troisième surface de butée SB3 en induisant le premier contact serrant radial et étanche de la première surface externe SE1 (de la première lèvre L1) contre la troisième surface interne SI3.

Préférentiellement, comme illustré sur les figures 10 à 12, les deuxième SB2 et troisième SB3 surfaces de butée présentent sensiblement une même inclinaison initiale. Cette inclinaison commune est préférentiellement comprise entre un angle α4 d'environ +5° et un angle α4 d'environ +30°. Elle est plus préférentiellement encore égale à environ 10°.

Lorsque la deuxième surface de butée SB2 s'appuie contre la troisième surface de butée SB3 pendant la phase de vissage, la première lèvre L1 est contrainte à se diriger vers l'extérieur de la connexion. Cela permet de pré-contraindre radialement la première lèvre L1 et donc de renforcer son contact avec le second élément tubulaire EF au niveau du logement LO.

Par ailleurs, il est avantageux que la troisième surface interne SI3 du second élément tubulaire EF comprenne une portion DC3, placée entre sa liaison avec la quatrième surface de butée SB4 et la seconde portion curviligne C2 de la gorge G1, et dans laquelle est défini initialement une première surface d'étanchéité présentant globalement une inclinaison d'un angle α10 choisi par rapport au plan transverse à la direction longitudinale A.

Cette première surface d'étanchéité DC3 peut être éventuellement définie par un troisième décrochement annulaire local vers l'intérieur de la troisième surface interne SI3. Elle peut se présenter sous la forme d'une surface conique ou d'une surface bombée, présentant éventuellement une portion de type torique.

L'angle d'inclinaison α10 de la première surface d'étanchéité (éventuellement du troisième décrochement annulaire local) DC3 est initialement compris, de préférence, entre environ +1 ° et environ +30°, et plus préférentiellement égal à environ 10°.

Par ailleurs, la première surface externe SE 1 du premier élément tubulaire EM comprend une zone terminale, située au niveau de sa liaison avec la première surface de butée SB 1 (et donc au niveau de la première lèvre L1), et dans laquelle est initialement définie une seconde surface d'étanchéité présentant globalement une inclinaison d'un angle α11 choisi par rapport au plan transverse à la direction longitudinale A.

Cette seconde surface d'étanchéité peut être éventuellement définie par un quatrième décrochement annulaire local vers l'intérieur de la première surface externe SE1. Elle peut se présenter sous la forme d'une surface conique ou d'une surface bombée, présentant éventuellement une portion de type torique.

Cette seconde surface d'étanchéité DC4 est destinée à être serrée radialement pendant la phase de vissage, contre la première surface d'étanchéité DC3 du second élément tubulaire EF.

L'angle d'inclinaison α11 de la seconde surface d'étanchéité (éventuellement du quatrième décrochement annulaire local) DC4 est initialement compris, de préférence, entre environ +1 et environ +30°, et plus préférentiellement égal à environ 10°.

Les angles d'inclinaison α10 et α11 sont préférentiellement identiques. Mais, cela n'est pas obligatoire. On peut en effet envisager, par exemple, que l'une des première DC3 et seconde DC4 surfaces d'étanchéité soit conique ou bombée et présente une inclinaison non nulle, tandis que l'autre surface d'étanchéité est par exemple cylindrique et présente une inclinaison nulle.

Les première DC3 et seconde DC4 surfaces d'étanchéité, éventuellement définies par les troisième et quatrième décrochements annulaires locaux, sont respectivement agencées de manière à pouvoir être serrées radialement l'une contre l'autre, pendant la phase de vissage, en induisant un troisième contact serrant étanche.

Par ailleurs, les première DC3 et seconde DC4 surfaces d'étanchéité peuvent être agencées de manière à ce que le premier contact serrant étanche soit induit après le troisième contact serrant étanche. Cela permet en effet de renforcer le premier contact serrant étanche.

En d'autres termes, pendant la phase de vissage il est préférable que la première lèvre L1 entre tout d'abord en contact par la première surface d'étanchéité DC3 avec la seconde surface d'étanchéité DC4, puis que la deuxième surface de butée SB2 s'appuie sur la troisième surface de butée SB3.

Dans cet exemple de réalisation, la partie centrale PC de la gorge annulaire G1 s'étend par exemple sur une longueur axiale PR' égale à environ 2,2 mm, une profondeur radiale H' égale à environ 1 mm, et les portions curvilignes C1 et C2 présentent par exemple un rayon de courbure égal à environ 5,3 mm. Par ailleurs, la distance axiale D qui sépare le plan de symétrie PSG, de la gorge G1, de la quatrième surface de butée axiale SB4, qui définit le fond du logement (ou rainure) LO, est par exemple égale à environ 5,7 mm.

Le logement LO s'étend toujours sur une longueur axiale choisie PR, égale à celle de la seconde lèvre L2, et suivant une profondeur radiale choisie H (perpendiculaire à la direction longitudinale A). Le rapport PR/H est toujours préférentiellement compris entre environ 1 et environ 3, mais il est désormais plus préférentiellement compris entre environ 1,4 et environ 1,9, et encore plus préférentiellement égal à environ 1,7. Par exemple, PR est égal à 4,2 mm et H est égal à 2,4 mm, ce qui fournit un rapport PR/H égal à environ 1,7.

Par ailleurs, comme dans l'exemple de réalisation précédent, la deuxième surface externe SE2 de la seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique dont l'inclinaison est initialement comprise entre un angle d'environ +8° et un angle d'environ +12°, et plus préférentiellement égale à environ 10°. Comme indiqué précédemment, cela permet de faciliter la pénétration de la première lèvre L1 dans le logement (ou rainure) LO, notamment dans le cas d'interférences accidentelles.

En outre, comme dans l'exemple de réalisation précédent, la première surface interne SI1 de la première lèvre L1 est de préférence inclinée d'un angle α3 choisi par rapport à la direction longitudinale A du tube T1. Elle forme ainsi initialement une surface conique. L'angle d'inclinaison est toujours, de préférence, compris entre environ 0,1° et environ 15°, et plus préférentiellement égal à environ 2,5°. Comme indiqué précédemment, cette inclinaison permet à la seconde lèvre L2 de se rapprocher de l'extérieur du tube T2 lors du passage du boulet, limitant ainsi l'effet banane.

De plus, comme dans l'exemple de réalisation précédent, afin de favoriser la courbure de la première lèvre L1 et de renforcer le contact entre l'épaulement ou talon EP et la gorge G1, la première surface externe SE1 peut comprendre juste avant la première partie P1 un premier décrochement DC1 vers l'intérieur du tube T1, préférentiellement sensiblement continu. Ce premier décrochement DC1 constitue initialement un chanfrein conique d'angle α6, par rapport à la direction longitudinale A, compris entre environ 8° et environ 12°, et plus préférentiellement égal à environ 10°. Par exemple, ce décrochement DC1 débute à une distance de la première surface de butée axiale SB 1 (suivant la direction longitudinale A) égale à environ 8,1 mm.

Toujours comme dans l'exemple de réalisation précédent, la quatrième surface interne SI4 peut comprendre une surépaisseur annulaire locale SA1 en direction de l'intérieur du tube T1, au voisinage de la deuxième surface de butée SB2. Préférentiellement, comme illustré sur les figures 10 et 12, cette surépaisseur SA1 est sensiblement constante dans la zone d'extension de la partie centrale PC de la gorge G1, puis elle décroît, préférentiellement de façon sensiblement continue en direction de la première partie P1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

De même, la cinquième surface interne SI5 de la seconde lèvre L2 peut comprendre, comme dans l'exemple de réalisation précédent, une surépaisseur annulaire locale SA2 en direction de l'intérieur du tube T2, au voisinage de la troisième surface de butée SB3. Préférentiellement, comme illustré sur les figures 11 et 12, cette surépaisseur SA2 est sensiblement constante dans la zone d'extension de la seconde lèvre L2, puis elle décroît préférentiellement de façon sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°. Cette surépaisseur SA2 dépend préférentiellement de la surépaisseur SA1 et est préférentiellement inférieure à celle-ci. Par exemple, cette surépaisseur SA2 est comprise entre environ 0,3 mm et 0,8 mm, et de préférence égale à environ 0,5 mm.

La constitution d'un joint expansé à partir d'un joint expansible du type de celui décrit ci-avant en référence aux figures 10 à 12 est sensiblement identique à celle décrite en référence aux figures 5 à 8.

Dans une première étape, on visse l'extrémité, par exemple mâle EM, de l'un des tubes, par exemple T1, sur l'extrémité, par exemple femelle EF, de l'autre tube, par exemple T2, jusqu'à ce que la seconde surface d'étanchéité DC4 entre en contact avec la première surface d'étanchéité DC3 en induisant le troisième contact serrant étanche.

Dans une deuxième étape, on poursuit le vissage jusqu'à ce que la deuxième surface de butée SB2 s'appuie sur la troisième surface de butée SB3 de la seconde lèvre L2 en induisant le premier contact serrant radial et étanche de la première surface externe SE1 contre la troisième surface interne SIS.

Dans une troisième étape, on poursuit encore le vissage afin de pré-côntraindre radialement la première lèvre L1 grâce à l'inclinaison (ou pente) des deuxième SB2 et troisième SB3 surfaces de butée des première L1 et seconde L2 lèvres et grâce à l'inclinaison (ou pente) des première DC3 et seconde DC4 surfaces d'étanchéité du logement LO et de la première lèvre L1, jusqu'à un niveau de couple spécifié.

Le contact entre les surfaces internes et externes de la lèvre L1 et du logement LO est ainsi encore plus renforcé que dans l'exemple précédent, ce qui permet d'assurer une étanchéité du joint encore plus importante avant l'étape d'expansion diamétrale.

On obtient ainsi, avant expansion, une excellente étanchéité aux fluides sous pression interne, y compris en présence de forces de traction ou de compression axiale.

La quatrième étape, qui consiste à expanser diamétralement le joint dans le domaine des déformations plastiques par introduction axiale dans l'un des tubes T1 et T2 d'un outil d'expansion diamétrale, comme par exemple un boulet à tête conique, est identique à celle décrite précédemment.

En fin d'expansion, un quatrième contact serrant étanche est défini entre une extrémité libre de la première lèvre L 1 (au niveau de sa première surface interne SI1) et la deuxième surface externe SE2 de la seconde lèvre L2. Ainsi, la première lèvre L 1 est coincée par son extrémité libre, du fait du quatrième contact serrant, et par le "talon" qui la prolonge au niveau de la première surface externe SE1, du fait du second contact serrant.

Lorsque le premier élément tubulaire EM comprend une première surface d'étanchéité DC3, et éventuellement lorsque le second élément tubulaire EF comprend une seconde surface d'étanchéité DC4, l'écart des performances d'étanchéité entre les côtés amont et aval d'un assemblage de joints est sensiblement réduit une fois la quatrième étape terminée. Cela résulte d'une augmentation des pressions de contact du côté amont sans détérioration des pressions de contact du côté aval.

Grâce à l'invention, on peut obtenir des joints qui présentent une bonne, voire même excellente, étanchéité aux gaz sous haute pression, internes comme externes, avant comme après la phase d'expansion, y compris en présence de taux d'expansion élevés, voire très élevés, typiquement compris entre 10% et 35%. Bien entendu, l'invention s'applique également aux taux d'expansion inférieurs à 10%.

En outre, l'invention permet de ne pas trop "dissymétriser" les déformations lors de l'expansion dans le cas d'un assemblage manchonné, et donc de procurer une bonne étanchéité des joints filetés expansés formés de chaque côté de la partie centrale du manchon.

Par ailleurs, l'invention peut être mise en oeuvre dans une gamme importante d'aciers et d'alliages, du moment que le matériau présente une ductilité suffisante pour subir l'expansion. Dans le cas des aciers le matériau peut être un acier non allié, ou un acier au Mn, ou un acier au Cr-Mo, ou un acier micro-allié, ou un acier au Bore, ou une combinaison des compositions précitées ( acier au Cr-Mo-Nb-B), ou un acier à 13% de Cr martensique, ou un acier duplex austéno-ferritique à 22 ou 25% de Chrome, ou encore un acier inoxydable austénitique. Par exemple, on peut utiliser un acier au C-Mn pour des puits non corrosifs, ou bien un acier à 0,2% de C et 13% de Cr (X2OCr13 selon la dénomination Euronorm et AISI 420 selon la dénomination américaine) pour des puits corrosifs contenant du CO₂.

En outre, le matériau peut être éventuellement traité thermiquement de manière à présenter une limite d'élasticité supérieure à une valeur choisie ou comprise dans un intervalle de valeurs choisies. La limite d'élasticité minimale peut par exemple être choisie dans un intervalle allant de 300 MPa à 1000 MPa, voire plus.

L'invention ne se limite pas aux procédés et aux modes de réalisation de joints tubulaires filetés étanches décrits ci-avant, seulement à titre d'exemple, mais elle englobe toutes les variantes que pourra envisager l'homme de l'art dans le cadre des revendications ci-après.

## Revendications

1. Joint tubulaire expansible comprenant, d'une part, un premier élément tubulaire (EM) comportant une première partie (P1), munie d'un filetage mâle (FM), et une seconde partie (P2) prolongeant ladite première partie et comprenant i) une première surface externe (SE1), ii) une première lèvre annulaire (L1) ayant une première surface de butée axiale (SB1) et une première surface interne (SI1) et délimitée par ladite première surface externe (SE1) sur une partie de la longueur axiale de celle-ci, et iii) une deuxième surface de butée (SB2), et d'autre part, un second élément tubulaire (EF) comportant i) un filetage femelle (FF), homologue du filetage mâle (FM) et vissé sur celui-ci, ii) une seconde lèvre annulaire (L2), ayant une troisième surface de butée (SB3) en appui contre ladite deuxième surface de butée (SB2), une deuxième surface externe. (SE2), placée en regard de ladite première surface interne (SI1), et une deuxième surface interne (SI2), iii) une quatrième surface de butée axiale (SB4), et iv) une troisième surface interne (SI3) s'étendant entre ladite quatrième surface de butée axiale (SB4) et ledit filetage femelle (FF) et définissant avec lesdites deuxième surface externe. (SE2) et quatrième surface de butée (SB4) un logement annulaire (LO) homologue de ladite première lèvre (L1), **caractérisé en ce que** lesdites deuxième (SB2) et troisième (SB3) surfaces de butée sont des surfaces coniques présentant des inclinaisons d'angles, par rapport à un plan transverse à une direction longitudinale (A), sensiblement identiques et choisis de manière à permettre un appui de ladite deuxième surface de butée (SB2) contre ladite troisième surface de butée (SB3) induisant un premier contact serrant radial et étanche de l'une desdites premières surfaces interne (SI1) et externe (SE1) de la première lèvre (L1) respectivement contre ladite deuxième surface externe (SE2) ou ladite troisième surface interne (SI3), et tels que, lors d'une expansion diamétrale dans le domaine de la déformation plastique effectuée ultérieurement sur le joint tubulaire expansible, ladite première surface externe (SE1) et ladite troisième surface interne (SI3) soient contraintes à définir localement un second contact serrant étanche.

2. Joint selon la revendication 1, **caractérisé en ce que** lesdites surfaces coniques des deuxième (SB2) et troisième (SB3) surfaces de butée sont respectivement convexe et concave de manière à induire ledit premier contact serrant radial et étanche de la première surface interne (SI1) contre la deuxième surface externe (SE2).

3. Joint selon la revendication 1, **caractérisé en ce que** lesdites surfaces coniques des deuxième (SB2) et troisième (SB3) surfaces de butée sont respectivement concave et convexe de manière à induire ledit premier contact serrant radial et étanche de la première surface externe (SE1) contre la troisième surface interne (SI3).

4. Joint selon l'une des revendications 1 à 3, **caractérisé en ce que** lesdites inclinaisons sont initialement comprises entre environ +5° et environ +30°.

5. Joint selon l'une des revendications 1 à 4, **caractérisé en ce que** ladite première lèvre (L1) et ledit logement (LO) présentent initialement des formes choisies de sorte que ledit premier contact serrant ne soit induit qu'après l'appui de ladite deuxième surface de butée (SB2) sur ladite troisième surface de butée (SB3).

6. Joint selon l'une des revendications 1 à 5, **caractérisé en ce que** ladite première surface de butée (SB1) est agencée pour être contrainte lors du vissage à s'appuyer contre ladite quatrième surface de butée (SB4) de manière à provoquer une mise en compression axiale de ladite première lèvre (L1) dans le domaine des déformations élastiques.

7. Joint selon l'une des revendications 1, à 6, **caractérisé en ce que** la deuxième surface externe (SE2) de ladite seconde lèvre (L2) présente initialement, au niveau de sa liaison avec ladite troisième surface de butée (SB3), une portion annulaire inclinée par rapport à ladite direction longitudinale (A) d'un angle compris entre environ 8° et environ 12°, et préférentiellement égal à environ 10°.

8. Joint selon l'une des revendications 1 à 7, **caractérisé en ce que** ladite première surface interne (SI1) de la première lèvre (L1) est initialement inclinée par rapport à ladite direction longitudinale (A) d'un angle compris entre environ 0,1 ° et environ 15°.

9. Joint selon l'une des revendications 1 à 8, **caractérisé en ce que** le rapport entre l'extension (PR) de la seconde lèvre (L2) dans la direction longitudinale (A) et l'extension (H) du logement dans la direction transverse est compris entre environ 1 et environ 3, et préférentiellement entre environ 1,2 et environ 1,6.

10. Joint selon l'une des revendications 1 à 9, **caractérisé en ce que** lesdits filetages mâle (FM) et femelle (FF) comportent initialement des filets munis d'un flanc porteur présentant un angle négatif compris entre environ - 3° et environ - 15°.

11. Joint selon l'une des revendications 1 à 10, **caractérisé en ce que** lesdits filetages mâle (FM) et femelle (FF) comportent initialement des filets munis d'un flanc d'engagement présentant un angle positif compris entre environ + 10° et environ +30°.

12. Joint selon la revendication 11, **caractérisé en ce que** lesdits filetages mâle (FM) et femelle (FF) sont agencés pour présenter après vissage et avant expansion un jeu axial entre leurs flancs d'engagement compris entre environ 0,05 mm et environ 0,3 mm.

13. Joint selon l'une des revendications 1 à 12, **caractérisé en ce que** ledit premier élément tubulaire (EM) présente initialement au niveau de sa première surface externe (SE1) et avant sa première partie (P1), un chanfrein conique définissant un premier décrochement annulaire local (DC1) vers l'intérieur.

14. Joint selon la revendication 13, **caractérisé en ce que** ledit chanfrein présente une pente sensiblement continue par rapport à la direction longitudinale (A) et comprise entre environ 8° et environ 12°.

15. Joint selon l'une des revendications 1 à 14, **caractérisé en ce que** ledit premier élément tubulaire (EM) est muni d'une seconde partie (P2) présentant initialement une surépaisseur annulaire locale choisie (SA1) au niveau d'une quatrième surface interne (SI4) prolongeant ladite deuxième surface de butée (SB2) en direction de la première partie (P1), et ladite troisième surface interne (SI3) comporte en un endroit choisi une gorge (G1) propre à être placée après vissage sensiblement au niveau de ladite surépaisseur locale (SA1) et à définir au niveau de la première surface externe, (SE1), lors de l'expansion diamétrale, un épaulement annulaire (EP) présentant une partie au moins de la conformation de ladite gorge (G1) et en contact serrant et étanche avec celle-ci.

16. Joint selon l'une des revendications 1 à 15, **caractérisé en ce que** ledit premier élément tubulaire (EM) présente initialement au niveau de sa première partie (P1), sur sa surface interne opposée audit filetage mâle (FM), un rétreint conique dans lequel est défini un deuxième décrochement annulaire local (DC2).

17. Joint selon la revendication 16, **caractérisé en ce que** ledit rétreint croît initialement sensiblement continûment selon une pente par rapport à la direction longitudinale A, comprise entre environ 2° et environ 20°.

18. Joint selon l'une des revendications 15 à 17, **caractérisé en ce que** l'on prévoit initialement une gorge (G1) comportant au moins deux portions curvilignes (C1, C2).

19. Joint selon la revendication 18, **caractérisé en ce que** lesdites portions curvilignes (C1, C2) présentent initialement des rayons de courbure sensiblement identiques.

20. Joint selon la revendication 19, **caractérisé en ce que** ledit rayon de courbure est initialement compris entre environ 2 mm et environ 60 mm.

21. Joint selon l'une des revendications 18 à 20, **caractérisé en ce que** les deux portions curvilignes (C1, C2) sont séparées par une partie centrale (PC) sensiblement cylindrique.

22. Joint selon l'une des revendications 18 à 21, **caractérisé en ce que** ladite gorge (G1) présente initialement une profondeur radiale (H') dont la valeur maximale est choisie de sorte que la section de matière en fond de gorge (G1) soit supérieure au produit de la plus faible section d'une partie courante des tubes (T1, T2) auxquels appartiennent lesdits premier (EM) et second (EF) éléments tubulaires par l'efficacité du joint en traction.

23. Joint selon l'une des revendications 1 à 22, **caractérisé en ce que** lesdits filetages mâle (FM) et femelle (FF) sont choisis dans un groupe comprenant les filetages de type conique et de type cylindrique, et sont chacun formés sur au moins une portion d'élément tubulaire (EM, EF).

24. Joint selon l'une des revendications 1 à 23, **caractérisé en ce que** ledit premier élément tubulaire (EM) est muni d'une première surface externe (SE1) bombée.

25. Joint selon l'une des revendications 1 à 24, **caractérisé en ce que** ledit second élément tubulaire appartient à un manchon de raccordement (M) sensiblement symétrique de type femelle/femelle et ledit premier élément tubulaire (EM) appartient à une extrémité d'un tube de grande longueur.

26. Joint selon la revendication 25, **caractérisé en ce que** ledit manchon (M) comporte une partie centrale (PCM) prolongée de part et d'autre par deux seconds éléments tubulaires (EF1, EF2) et initialement munie sur une surface externe d'une zone annulaire (G2) présentant une sous-épaisseur choisie de sorte que l'épaisseur initiale dudit manchon (M) au niveau de cette zone (G2) soit supérieure ou égale au produit de la section d'une partie courante des tubes (T1, T2), aux extrémités desquels sont formés lesdits premiers éléments tubulaires (EM), par l'efficacité du joint.

27. Joint selon la revendication 2 en combinaison avec l'une des revendications 4 à 26, **caractérisé en ce que** lesdites première (L1) et seconde (L2) lèvres présentent initialement des formes choisies de sorte que ladite première surface de butée (SB1) s'appuie sur ladite quatrième surface de butée (SB4) avant que ladite deuxième surface de butée (SB2) ne se soit appuyée sur ladite troisième surface de butée (SB3).

28. Joint selon la revendication 3 en combinaison avec l'une des revendications 4 à 26, **caractérisé en ce que** ladite troisième surface interne (SI3) du second élément tubulaire (EF) présente initialement, au niveau de sa liaison avec ladite quatrième surface de butée (SB4), une première surface d'étanchéité (DC3) présentant globalement une inclinaison d'un angle choisi par rapport à la direction longitudinale (A), et **en ce que** ledit premier élément tubulaire (EM) présente initialement, au niveau de sa première surface externe (SE1) et au niveau de sa liaison avec ladite première surface de butée (SB 1), une seconde surface d'étanchéité (DC4) présentant globalement une inclinaison d'un angle choisi par rapport à la direction longitudinale (A), de sorte que lors du vissage lesdites première (DC3) et seconde (DC4) surfaces d'étanchéité soient serrées radialement l'une contre l'autre en induisant un troisième contact serrant étanche.

29. Joint selon la revendication 28, **caractérisé en ce que** lesdites première (DC3) et seconde (DC4) sont agencées pour que ledit premier contact serrant étanche soit induit entre elles après ledit troisième contact serrant étanche, de manière à renforcer ce dernier.

30. Joint selon l'une des revendications 28 et 29, **caractérisé en ce que** lesdits angles choisis des première (DC3) et seconde (DC4) surfaces d'étanchéité sont initialement compris entre environ +1 ° et environ +30°.

31. Joint selon l'une des revendications 28 à 30, **caractérisé en ce que** l'une au moins desdites première (DC3) et seconde (DC4) surfaces d'étanchéité est une surface conique.

32. Joint selon l'une des revendications 28 à 31, **caractérisé en ce que** l'une au moins desdites première (DC3) et seconde (DC4) surfaces d'étanchéité est une surface bombée.

33. Joint selon la revendication 32, **caractérisé en ce que** ladite surface bombée comprend une portion de type torique.

34. Joint selon l'une des revendications 28 à 33, **caractérisé en ce que** ladite première surface d'étanchéité (DC3) est définie par un troisième décrochement annulaire local vers l'intérieur de ladite troisième surface interne (SI3).

35. Joint selon l'une des revendications 28 à 34, **caractérisé en ce que** ladite seconde surface d'étanchéité (DC4) est définie par un quatrième décrochement annulaire local vers l'intérieur de ladite première surface externe (SE1).

36. Procédé de réalisation d'un joint expansé tubulaire étanche, **caractérisé en ce qu'**il consiste, à partir d'un joint tubulaire expansible selon l'une des revendications précédentes ,
- à visser lesdits premier (EM) et second (EF) éléments tubulaires jusqu'à ce que ladite première lèvre (L1) soit logée dans ledit logement annulaire (LO), et que ladite deuxième surface de butée (SB2) s'appuie contre ladite troisième surface de butée (SB3) de manière à serrer radialement, à étanchéité en formant un premier contact serrant radial et étanche, l'une desdites premières surfaces interne (SI1) et externe (SE1) de la première lèvre (L1) respectivement contre ladite deuxième surface externe (SE2) ou ladite troisième surface interne (SI3), et
- à faire subir audit joint tubulaire expansible, à l'aide d'un outil d'expansion à déplacement axial, une expansion diamétrale dans le domaine de la déformation plastique, de manière à contraindre ladite première surface externe (SE1) et ladite troisième surface interne (SI3) à définir localement un second contact serrant et étanche.

37. Procédé selon la revendication 36, **caractérisé en ce que** l'on part de première (L1) et seconde (L2) lèvres de formes choisies de sorte que ledit premier contact serrant soit établi entre lesdites première surface interne (SI1) et deuxième surface externe (SE2), et **en ce que** ledit premier contact serrant n'est établi qu'après l'appui de ladite deuxième surface de butée (SB2) sur ladite troisième surface de butée (SB3).

38. Procédé selon la revendication 37, **caractérisé en ce que** ledit vissage contraint tout d'abord ladite première surface de butée (SB1) à s'appuyer contre ladite quatrième surface de butée (SB4) de manière à provoquer une mise en compression axiale de ladite première lèvre (L1) dans le domaine des déformations élastiques.

39. Procédé selon la revendication 36, **caractérisé en ce que** l'on part d'un joint tubulaire expansible selon la revendication 28, et **en ce que** ledit vissage contraint lesdites première (DC3) et seconde (DC4) surfaces d'étanchéité à se serrer radialement l'une contre l'autre en induisant d'abord le troisième contact serrant étanche puis le premier contact serrant étanche qui vient renforcer ledit troisième contact serrant étanche.

40. Procédé selon l'une des revendications 36 à 39, **caractérisé en ce que** ladite expansion induit un quatrième contact serrant étanche entre une extrémité libre de la première surface interne (SI1) et la deuxième surface externe (SE2).

41. Procédé selon l'une des revendications 36 à 40, **caractérisé en ce que** l'expansion radiale du joint est réalisée selon un taux d'expansion au moins égal à 10%.

## Claims

1. Expandable tubular joint comprising, on the one hand, a first tubular element (EM) comprising a first portion (P1), provided with a male thread (FM), and a second portion (P2) extending said first portion and comprising i) a first outer surface (SE1), ii) a first annular lip (L1) having a first axial abutment surface (SB1) and a first inner surface (SI1) and delimited by said first outer surface (SE1) over a portion of the axial length thereof, and iii) a second abutment surface (SB2), and, on the other hand, a second tubular element (EF) comprising i) a female thread (FF), matching the male thread (FM) and screwed thereto, ii) a second annular lip (L2) having a third abutment surface (SB3) resting against said second abutment surface (SB2), a second outer surface (SE2), arranged to face said first inner surface (SI1), and a second inner surface (SI2), iii) a fourth axial abutment surface (SB4), and iv) a third inner surface (SI3) extending between said fourth axial abutment surface (SB4) and said female thread (FF) and defining with said second outer surface (SE2) and fourth abutment surface (SB4) an annular recess (LO) matching said first lip (L1), **characterised in that** said second (SB2) and third (SB3) abutment surfaces are conical surfaces having substantially identical angles of inclination relative to a plane transverse to a longitudinal direction (A), selected so as to allow said second abutment surface (SB2) to rest against said third abutment surface (SB3), generating a first radial and sealing interference contact of one of said first inner (SI1) and outer (SE2) surfaces of the first lip (L1) against said second outer surface (SE2) or said third inner surface (SI3) respectively, and such that, during a diametral expansion in the plastic deformation region subsequently carried out on the expandable tubular joint, said first outer surface (SE1) and said third inner surface (SI3) are forced locally to define a second sealing interference contact.

2. Joint according to claim 1, **characterised in that** said conical surfaces of the second (SB2) and third (SB3) abutment surfaces are convex and concave respectively, so as to generate said first radial and sealing interference contact of the first inner surface (SI1) against the second outer surface (SE2).

3. Joint according to claim 1, **characterised in that** said conical surfaces of the second (SB2) and third (SB3) abutment surfaces are concave and convex respectively, so as to generate said first radial and sealing interference contact of the first outer surface (SE1) against the third inner surface (SI3).

4. Joint according to any one of claims 1 to 3, **characterised in that** said inclinations are initially between approximately +5° and approximately +30°.

5. Joint according to any one of claims 1 to 4, **characterised in that** said first lip (L1) and said recess (LO) initially have shapes selected such that said first interference contact is not generated until said second abutment surface (SB2) rests on said third abutment surface (SB3).

6. Joint according to any one of claims 1 to 5, **characterised in that** said first abutment surface (SB1) is arranged to be forced during screwing to rest against said fourth abutment surface (SB4) so as to cause said first lip (L1) to be subjected to axial compression in the elastic deformation region.

7. Joint according to any one of claims 1 to 6, **characterised in that** the second outer surface (SE2) of said second lip (L2) initially has, in the region of its connection to said third abutment surface (SB3), an annular portion inclined relative to said longitudinal direction (A) by an angle of between approximately 8° and approximately 12°, and preferably equal to approximately 10°.

8. Joint according to any one of claims 1 to 7, **characterised in that** said first inner surface (SI1) of the first lip (L1) is initially inclined relative to said longitudinal direction (A) by an angle of between approximately 0.1° and approximately 15°.

9. Joint according to any one of claims 1 to 8, **characterised in that** the ratio between the extension (PR) of the second lip (L2) in the longitudinal direction (A) and the extension (H) of the recess in the transverse direction is between approximately 1 and approximately 3, and preferably between approximately 1.2 and approximately 1.6.

10. Joint according to any one of claims 1 to 9, **characterised in that** said male (FM) and female (FF) threads initially comprise threads provided with a carrier flank having a negative angle of between approximately -3° and approximately -15°.

11. Joint according to any one of claims 1 to 10, **characterised in that** said male (FM) and female (FF) threads initially comprise threads provided with a stabbing flank having a positive angle of between approximately +10° and approximately +30°.

12. Joint according to claim 11, **characterised in that** said male (FM) and female (FF) threads are arranged to have, after screwing and prior to expansion, an axial clearance between their stabbing flanks of between approximately 0.05 mm and approximately 0.3 mm.

13. Joint according to any one of claims 1 to 12, **characterised in that** said first tubular element (EM) initially has, in the region of its first outer surface (SE1) and before its first portion (P1), a conical chamfer defining a first local annular set-back (DC1) toward the interior.

14. Joint according to claim 13, **characterised in that** said chamfer has a slope which is substantially continuous relative to the longitudinal direction (A) and between approximately 8° and approximately 12°.

15. Joint according to any one of claims 1 to 14, **characterised in that** said first tubular element (EM) is provided with a second portion (P2) initially having a local annular added thickness (SA1) selected in the region of a fourth inner surface (SI4) extending said second abutment surface (SB2) in the direction of the first portion (P1), and said third inner surface (SI3) comprises, at a selected location, a groove (G1) suitable for being arranged after screwing substantially in the region of said local added thickness (SA1) and for defining in the region of the first outer surface (SE1), during the diametral expansion, an annular shoulder (EP) having at least a portion of the shape of said groove (G1) and being in sealing interference contact therewith.

16. Joint according to any one of claims 1 to 15, **characterised in that** said first tubular element (EM) initially has in the region of its first portion (P1), over its inner surface opposing said male thread (FM), a conical neck in which is defined a second local annular set-back (DC2).

17. Joint according to claim 16, **characterised in that** said neck initially grows substantially continuously at a slope relative to the longitudinal direction (A) of between approximately 2° and approximately 20°.

18. Joint according to any one of claims 15 to 17, **characterised in that** a groove (G1) comprising at least two curvilinear portions (C1, C2) is initially provided.

19. Joint according to claim 18, **characterised in that** said curvilinear portions (C1, C2) initially have substantially identical radii of curvature.

20. Joint according to claim 19, **characterised in that** said radius of curvature is initially between approximately 2 mm and approximately 60 mm.

21. Joint according to any one of claims 18 to 20, **characterised in that** the two curvilinear portions (C1, C2) are separated by a substantially cylindrical central portion (PC).

22. Joint according to any one of claims 18 to 21, **characterised in that** said groove (G1) initially has a radial depth (H'), the maximum value of which is selected such that the material section (G1) at the bottom of the groove is greater than the product of the smallest section of a common portion of the tubes (T1, T2) with which said first (EM) and second (EF) tubular elements are associated, and the efficiency of the joint under tension.

23. Joint according to any one of claims 1 to 22, **characterised in that** said male (FM) and female (FF) threads are selected from a group consisting of conical-type and cylindrical-type threads and are each formed over at least one tubular element portion (EM, EF).

24. Joint according to any one of claims 1 to 23, **characterised in that** said first tubular element (EM) is provided with a first rounded outer surface (SE1).

25. Joint according to any one of claims 1 to 24, **characterised in that** said second tubular element is associated with a substantially symmetrical female/female-type connection sleeve (M) and said first tubular element (EM) is associated with an end of a great length tube.

26. Joint according to claim 25, **characterised in that** said sleeve (M) comprises a central portion (PCM) extended on either side by two second tubular elements (EF1, EF2) and initially provided over an outer surface with an annular zone (G2) having a reduced thickness selected such that the initial thickness of said sleeve (M) in the region of this zone (G2) is greater than or equal to the product of the section of a common portion of the tubes (T1, T2), at the ends of which are formed said first tubular elements (EM), and the efficiency of the joint.

27. Joint according to claim 2 in combination with any one of claims 4 to 26, **characterised in that** said first (L1) and second (L2) lips initially have shapes selected such that said first abutment surface (SB1) rests on said fourth abutment surface (SB4) before said second abutment surface (SB2) is pressed onto said third abutment surface (SB3).

28. Joint according to claim 3 in combination with any one of claims 4 to 26, **characterised in that** said third inner surface (SI3) of the second tubular element (EF) initially has, in the region of its connection to said fourth abutment surface (SB4), a first sealing surface (DC3) generally having a selected angle of inclination relative to the longitudinal direction (A) and **in that** said first tubular element (EM) initially has, in the region of its first outer surface (SE1) and in the region of its connection to said first abutment surface (SB1), a second sealing surface (DC4) generally having a selected angle of inclination relative to the longitudinal direction (A) in such a way that, during screwing, said first (DC3) and second (DC4) sealing surfaces are radially tightened against one another, generating a third sealing interference contact.

29. Joint according to claim 28, **characterised in that** said first (DC3) and second (DC4) sealing surfaces are arranged in such a way that said first sealing interference contact is generated between them after said third sealing interference contact, so as to reinforce said third sealing interference contact.

30. Joint according to either claim 28 or claim 29, **characterised in that** said selected angles of the first (DC3) and second (DC4) sealing surfaces are initially between approximately +1° ° and approximately +30°.

31. Joint according to any one of claims 28 to 30, **characterised in that** at least one of said first (DC3) and second (DC4) sealing surfaces is a conical surface.

32. Joint according to any one of claims 28 to 31, **characterised in that** at least one of said first (DC3) and second (DC4) sealing surfaces is a rounded surface.

33. Joint according to claim 32, **characterised in that** said rounded surface comprises a toric-type portion.

34. Joint according to any one of claims 28 to 33, **characterised in that** said first sealing surface (DC3) is defined by a third local annular set-back toward the interior of said third inner surface (SI3).

35. Joint according to any one of claims 28 to 34, **characterised in that** said second sealing surface (DC4) is defined by a fourth local annular set-back toward the interior of said first outer surface (SE1).

36. Method for producing a sealed tubular expanded joint, **characterised in that** it consists, based on an expandable tubular joint according to any one of the preceding claims,
- in screwing said first (EM) and second (EF) tubular elements until said first lip (L1) is accommodated in said annular recess (LO) and said second abutment surface (SB2) rests against said third abutment surface (SB3) so as radially to tighten, in a sealed manner by forming a first radial and sealing interference contact, one of said first inner (SI1) and outer (SE1) surfaces of the first lip (L1) against said second outer surface (SE2) or said third inner surface (SI3) respectively, and
- in subjecting said expandable tubular joint, by means of an axially displaceable expansion tool, to a diametral expansion in the plastic deformation region, so as to force said first outer surface (SE1) and said third inner surface (SI3) locally to define a second sealing interference contact.

37. Method according to claim 36, **characterised in that** first (L1) and second (L2) lips having shapes selected such that said first interference contact is established between said first inner surface (SI1) and second outer surface (SE2) are taken as a starting point and **in that** said first interference contact is not established until said second abutment surface (SB2) rests on said third abutment surface (SB3).

38. Method according to claim 37, **characterised in that** said screwing firstly forces said first abutment surface (SB1) to be pressed against said fourth abutment surface (SB4) so as to cause said first lip (L1) to be subjected to axial compression in the elastic deformation region.

39. Method according to claim 36, **characterised in that** an expandable tubular joint according to claim 28 is taken as a starting point and **in that** said screwing forces said first (DC3) and second (DC4) sealing forces to be radially tightened against one another, generating first the third sealing interference contact then the first sealing interference contact, which comes to reinforce said third sealing interference contact.

40. Method according to any one of claims 36 to 39, **characterised in that** said expansion generates a fourth sealing interference contact between a free end of the first inner surface (SI1) and the second outer surface (SE2).

41. Method according to any one of claims 36 to 40, **characterised in that** the radial expansion of the joint takes place at an expansion rate at least equal to 10%.

## Patentansprüche

1. Expandierbare Rohrverbindung, die einerseits ein erstes Rohrelement (EM), das einen ersten, mit einem Außengewinde (FM) versehenen Teil (P1), und einen zweiten Teil (P2) aufweist, der den ersten Teil verlängert und i) eine erste Außenfläche (SE1), ii) eine erste ringförmige Lippe (L1), die eine erste axiale Anschlagfläche (SB1) und eine erste Innenfläche (SI1) hat und von der ersten Außenfläche (SE1) über einen Teil von deren axialen Länge begrenzt wird, und iii) eine zweite Anschlagfläche (SB2) enthält, und andererseits ein zweites Rohrelement (EF) enthält, das i) ein Innengewinde (FF) entsprechend dem Außengewinde (FM) und auf dieses geschraubt, ii) eine zweite ringförmige Lippe (L2), die eine dritte Anschlagfläche (SB3) in Auflage gegen die zweite Anschlagfläche (SB2), eine zweite Außenfläche (SE2), die gegenüber der ersten Innenfläche (SI1) angeordnet ist, und eine zweite Innenfläche (SI2) hat, iii) eine vierte axiale Anschlagfläche (SB4), und iv) eine dritte Innenfläche (SI3) aufweist, die sich zwischen der vierten axialen Anschlagfläche (SB4) und dem Innengewinde (FF) erstreckt und mit der zweiten Außenfläche (SE2) und der vierten Anschlagfläche (SB4) eine ringförmige Aufnahme (LO) entsprechend der ersten Lippe (L1) definiert, **dadurch gekennzeichnet, dass** die zweite (SB2) und die dritte (SB3) Anschlagfläche kegelförmige Flächen sind, die bezüglich einer Ebene quer zu einer Längsrichtung (A) im Wesentlichen gleiche Winkelneigungen aufweisen, die so gewählt sind, dass sie eine Auflage der zweiten Anschlagfläche (SB2) gegen die dritte Anschlagfläche (SB3) erlauben, die einen ersten radialen und dichten Anpresskontakt einer der ersten Innenfläche (SI1) und Außenfläche (SE1) der ersten Lippe (L1) gegen die zweite Außenfläche (SE2) bzw. die dritte Innenfläche (SI3) bewirkt, und so gewählt sind, dass bei einer diametralen Expansion auf dem Gebiet der plastischen Verformung, die später an der expandierbaren Rohrverbindung durchgeführt wird, die erste Außenfläche (SE1) und die dritte Innenfläche (SI3) gezwungen werden, lokal einen zweiten dichten Anpresskontakt zu definieren.

2. Verbindung nach Anspruch 1, **dadurch gekennzeichnet, dass** die kegelförmigen Flächen der zweiten (SB2) und dritten (SB3) Anschlagfläche konvex bzw. konkav sind, um den ersten radialen und dichten Anpresskontakt der ersten Innenfläche (SI1) gegen die zweite Außenfläche (SE2) zu bewirken.

3. Verbindung nach Anspruch 1, **dadurch gekennzeichnet, dass** die kegelförmigen Flächen der zweiten (SB2) und dritten (SB3) Anschlagfläche konkav bzw. konvex sind, um den ersten radialen und dichten Anpresskontakt der ersten Außenfläche (SE1) gegen die dritte Innenfläche (SI3) zu bewirken.

4. Verbindung nach einem der Ansprüche 1 bis 3, **dadurch gekennzeichnet, dass** die Neigungen anfänglich zwischen etwa +5° und etwa +30° liegen.

5. Verbindung nach einem der Ansprüche 1 bis 4, **dadurch gekennzeichnet, dass** die erste Lippe (L1) und die Aufnahme (LO) anfangs derart gewählte Formen haben, dass der erste Anpresskontakt erst nach der Auflage der zweiten Anschlagfläche (SB2) auf der dritten Anschlagfläche (SB3) bewirkt wird.

6. Verbindung nach einem der Ansprüche 1 bis 5, **dadurch gekennzeichnet, dass** die erste Anschlagfläche (SB1) angeordnet ist, um beim Schraubvorgang gezwungen zu werden, sich gegen die vierte Anschlagfläche (SB4) zu drücken, um eine axiale Komprimierung der ersten Lippe (L1) auf dem Gebiet der elastischen Verformungen hervorzurufen.

7. Verbindung nach einem der Ansprüche 1 bis 6, **dadurch gekennzeichnet, dass** die zweite Außenfläche (SE2) der zweiten Lippe (L2) anfangs im Bereich ihrer Verbindung mit der dritten Anschlagfläche (SB3) einen bezüglich der Längsrichtung (A) um einen Winkel geneigten ringförmigen Abschnitt hat, der zwischen etwa 8° und etwa 12° liegt und vorzugsweise etwa 10° beträgt.

8. Verbindung nach einem der Ansprüche 1 bis 7, **dadurch gekennzeichnet, dass** die erste Innenfläche (SI1) der ersten Lippe (L1) anfangs bezüglich der Längsrichtung (A) um einen Winkel geneigt ist, der zwischen etwa 0,1 und etwa 15° liegt.

9. Verbindung nach einem der Ansprüche 1 bis 8, **dadurch gekennzeichnet, dass** das Verhältnis zwischen der Ausdehnung (PR) der zweiten Lippe (L2) in der Längsrichtung (A) und der Ausdehnung (H) der Aufnahme in der Querrichtung zwischen etwa 1 und etwa 3, und vorzugsweise zwischen etwa 1,2 und etwa 1,6 liegt.

10. Verbindung nach einem der Ansprüche 1 bis 9, **dadurch gekennzeichnet, dass** das Außengewinde (FM) und das Innengewinde (FF) anfangs Gewindegänge aufweisen, die mit einer Tragflanke versehen sind, die einen negativen Winkel zwischen etwa -3° und etwa -15° hat.

11. Verbindung nach einem der Ansprüche 1 bis 10, **dadurch gekennzeichnet, dass** das Außengewinde (FM) und das Innengewinde (FF) anfangs Gewindegänge aufweisen, die mit einer Eingriffsflanke versehen sind, die einen positiven Winkel zwischen etwa + 10° und etwa +30° hat.

12. Verbindung nach Anspruch 11, **dadurch gekennzeichnet, dass** das Außengewinde (FM) und das Innengewinde (FF) angeordnet sind, um nach dem Schraubvorgang und vor der Expansion ein axiales Spiel zwischen ihren Eingriffsflanken zu haben, das zwischen etwa 0,05 mm und etwa 0,3 mm liegt.

13. Verbindung nach einem der Ansprüche 1 bis 12, **dadurch gekennzeichnet, dass** das erste Rohrelement (EM) anfangs im Bereich seiner ersten Außenfläche (SE1) und vor seinem ersten Teil (P1) eine kegelförmige Abschrägung hat, die einen ersten lokalen ringförmigen Absatz (DC1) nach innen definiert.

14. Verbindung nach Anspruch 13, **dadurch gekennzeichnet, dass** die Abschrägung eine im Wesentlichen kontinuierliche Neigung bezüglich der Längsrichtung (A) hat, die zwischen etwa 8° und etwa 12° liegt.

15. Verbindung nach einem der Ansprüche 1 bis 14, **dadurch gekennzeichnet, dass** das erste Rohrelement (EM) mit einem zweiten Teil (P2) versehen ist, der anfangs eine gewählte lokale ringförmige Überdicke (SA1) im Bereich einer vierten Innenfläche (SI4) hat, die die zweite Anschlagfläche (SB2) in Richtung des ersten Teils (P1) verlängert, und die dritte Innenfläche (SB) an einer gewählten Stelle eine Nut (G1) aufweist, die nach dem Schraubvorgang im Wesentlichen im Bereich der lokalen Überdicke (SA1) angeordnet werden und im Bereich der ersten Außenfläche (SE1) bei der diametralen Expansion eine Ringschulter (EP) definieren kann, die mindestens einen Teil der Gestaltung der Nut (G1) hat und mit dieser in dichtem Anpresskontakt ist.

16. Verbindung nach einem der Ansprüche 1 bis 15, **dadurch gekennzeichnet, dass** das erste Rohrelement (EM) anfangs im Bereich seines ersten Teils (P1) auf seiner Innenfläche entgegengesetzt zum Außengewinde (FM) eine kegelförmige Querschnittsverminderung hat, in der ein zweiter lokaler ringförmiger Absatz (DC2) definiert ist.

17. Verbindung nach Anspruch 16, **dadurch gekennzeichnet, dass** die Querschnittsverminderung anfangs im Wesentlichen kontinuierlich gemäß einer Neigung bezüglich der Längsrichtung A zunimmt, die zwischen etwa 2° und etwa 20° liegt.

18. Verbindung nach einem der Ansprüche 15 bis 17, **dadurch gekennzeichnet, dass** anfangs eine Nut (G1) vorgesehen wird, die mindestens zwei gekrümmte Abschnitte (C1, C2) aufweist.

19. Verbindung nach Anspruch 18, **dadurch gekennzeichnet, dass** die gekrümmten Abschnitte (C1, C2) anfangs im Wesentlichen gleiche Krümmungsradien haben.

20. Verbindung nach Anspruch 19, **dadurch gekennzeichnet, dass** der Krümmungsradius anfangs zwischen etwa 2 mm und etwa 60 mm liegt.

21. Verbindung nach einem der Ansprüche 18 bis 20, **dadurch gekennzeichnet, dass** die zwei gekrümmten Abschnitte (C1, C2) durch einen im Wesentlichen zylindrischen zentralen Teil (PC) getrennt werden.

22. Verbindung nach einem der Ansprüche 18 bis 21, **dadurch gekennzeichnet, dass** die Nut (G1) anfangs eine radiale Tiefe (H') hat, deren maximaler Wert so gewählt wird, dass der Materialquerschnitt am Boden der Nut (G1) größer als das Produkt aus dem geringsten Querschnitt eines laufenden Teils der Rohre (T1, T2), zu denen das erste (EM) und das zweite (EF) Rohrelement gehören, und dem Zugwirkungsgrad der Verbindung ist.

23. Verbindung nach einem der Ansprüche 1 bis 22, **dadurch gekennzeichnet, dass** das Außengewinde (FM) und das Innengewinde (FF) aus einer Gruppe ausgewählt werden, zu der die Gewinde vom kegelförmigen und vom zylindrischen Typ gehören, und je über mindestens einen Rohrelementabschnitt (EM, EF) geformt sind.

24. Verbindung nach einem der Ansprüche 1 bis 23, **dadurch gekennzeichnet, dass** das erste Rohrelement (EM) mit einer ersten gewölbten Außenfläche (SE1) versehen ist.

25. Verbindung nach einem der Ansprüche 1 bis 24, **dadurch gekennzeichnet, dass** das zweite Rohrelement zu einer im Wesentlichen symmetrischen Anschlussmuffe (M) vom Typ Aufnahme/Aufnahme gehört, und das erste Rohrelement (EM) zu einem Ende eines Rohrs großer Länge gehört.

26. Verbindung nach Anspruch 25, **dadurch gekennzeichnet, dass** die Muffe (M) einen zentralen Teil (PCM) aufweist, der zu beiden Seiten von zwei zweiten Rohrelementen (EF1, EF2) verlängert wird und anfangs auf einer Außenfläche mit einer Ringzone (G2) versehen ist, die eine Unterdicke hat, die so gewählt wird, dass die anfängliche Dicke der Muffe (M) im Bereich dieser Zone (G2) größer als das oder gleich dem Produkt aus dem Querschnitt eines laufenden Teils der Rohre (T1, T2), an deren Enden die ersten Rohrelemente (EM) gebildet sind, und dem Wirkungsgrad der Verbindung ist.

27. Verbindung nach Anspruch 2 in Verbindung mit einem der Ansprüche 4 bis 26, **dadurch gekennzeichnet, dass** die erste (L1) und die zweite (L2) Lippe anfangs Formen haben, die so gewählt werden, dass die erste Anschlagfläche (SB1) sich auf die vierte Anschlagfläche (SB4) drückt, ehe die zweite Anschlagfläche (SB2) sich auf die dritte Anschlagfläche (SB3) gedrückt hat.

28. Verbindung nach Anspruch 3 in Verbindung mit einem der Ansprüche 4 bis 26, **dadurch gekennzeichnet, dass** die dritte Innenfläche (SI3) des zweiten Rohrelements (EF) anfangs im Bereich ihrer Verbindung mit der vierten Anschlagfläche (SB4) eine erste Dichtfläche (DC3) hat, die global eine Neigung um einen gewählten Winkel bezüglich der Längsrichtung (A) hat, und dass das erste Rohrelement (EM) anfangs im Bereich seiner ersten Außenfläche (SE1) und im Bereich seiner Verbindung mit der ersten Anschlagfläche (SB1) eine zweite Dichtfläche (DC4) hat, die global eine Neigung um einen gewählten Winkel bezüglich der Längsrichtung (A) hat, so dass beim Schraubvorgang die erste (DC3) und die zweite (DC4) Dichtfläche radial gegeneinander gepresst werden, indem ein dritter dichter Anpresskontakt bewirkt wird.

29. Verbindung nach Anspruch 28, **dadurch gekennzeichnet, dass** die erste (DC3) und die zweite (DC4) Dichtfläche so angeordnet sind, dass der erste dichte Anpresskontakt zwischen ihnen nach dem dritten dichten Anpresskontakt bewirkt wird, um letzteren zu verstärken.

30. Verbindung nach einem der Ansprüche 28 und 29, **dadurch gekennzeichnet, dass** die gewählten Winkel der ersten (DC3) und der zweiten (DC4) Dichtfläche anfangs zwischen etwa +1° und etwa +30° liegen.

31. Verbindung nach einem der Ansprüche 28 bis 30, **dadurch gekennzeichnet, dass** mindestens eine der ersten (DC3) und zweiten (DC4) Dichtflächen eine kegelförmige Fläche ist.

32. Verbindung nach einem der Ansprüche 28 bis 31, **dadurch gekennzeichnet, dass** mindestens eine der ersten (DC3) und zweiten (DC4) Dichtflächen eine gewölbte Fläche ist.

33. Verbindung nach Anspruch 32, **dadurch gekennzeichnet, dass** die gewölbte Fläche einen Torusartigen Abschnitt aufweist.

34. Verbindung nach einem der Ansprüche 28 bis 33, **dadurch gekennzeichnet, dass** die erste Dichtfläche (DC3) durch einen dritten lokalen ringförmigen Absatz der dritten Innenfläche (SI3) nach innen definiert wird.

35. Verbindung nach einem der Ansprüche 28 bis 34, **dadurch gekennzeichnet, dass** die zweite Dichtfläche (DC4) durch einen vierten lokalen ringförmigen Absatz der ersten Außenfläche (SE1) nach innen definiert wird.

36. Verfahren zur Herstellung einer dichten expandierten Rohrverbindung, **dadurch gekennzeichnet, dass** es ausgehend von einer expandierbaren Rohrverbindung nach einem der vorhergehenden Ansprüche darin besteht,
- das erste (EM) und das zweite (EF) Rohrelement zu verschrauben, bis die erste Lippe (L1) in der ringförmigen Aufnahme (LO) angeordnet ist und die zweite Anschlagfläche (SB2) sich gegen die dritte Anschlagfläche (SB3) drückt, um radial dicht unter Bildung eines ersten radialen und dichten Anpresskontakts eine der ersten inneren (SI1) und äußeren Flächen (SE1) der ersten Lippe (L1) gegen die zweite Außenfläche (SE2) bzw. die dritte Innenfläche (SB) zu pressen, und
- die expandierbare Rohrverbindung mit Hilfe eines Expansionswerkzeugs mit axialer Verschiebung einer diametralen Expansion auf dem Gebiet der plastischen Verformung zu unterziehen, um die erste Außenfläche (SE1) und die dritte Innenfläche (SI3) zu zwingen, lokal einen zweiten dichten Anpresskontakt zu definieren.

37. Verfahren nach Anspruch 36, **dadurch gekennzeichnet, dass** von ersten (L1) und zweiten (L2) Lippen ausgegangen wird, deren Formen so gewählt werden, dass der erste Anpresskontakt zwischen der ersten Innenfläche (SI1) und der zweiten Außenfläche (SE2) hergestellt wird, und dass der erste Anpresskontakt erst nach der Auflage der zweiten Anschlagfläche (SB2) auf der dritten Anschlagfläche (SB3) hergestellt wird.

38. Verfahren nach Anspruch 37, **dadurch gekennzeichnet, dass** der Schraubvorgang zunächst die erste Anschlagfläche (SB1) zwingt, sich gegen die vierte Anschlagfläche (SB4) zu drücken, um eine axiale Komprimierung der ersten Lippe (L1) auf dem Gebiet der elastischen Verformungen hervorzurufen.

39. Verfahren nach Anspruch 36, **dadurch gekennzeichnet, dass** von einer expandierbaren Rohrverbindung nach Anspruch 28 ausgegangen wird, und dass der Schraubvorgang die erste (DC3) und die zweite (DC4) Dichtfläche zwingt, sich radial gegeneinander zu pressen, indem zunächst der dritte dichte Anpresskontakt und dann der erste dichte Anpresskontakt bewirkt wird, der den dritten dichten Anpresskontakt verstärkt.

40. Verfahren nach einem der Ansprüche 36 bis 39, **dadurch gekennzeichnet, dass** die Expansion einen vierten dichten Anpresskontakt zwischen einem freien Ende der ersten Innenfläche (SI1) und der zweiten Außenfläche (SE2) bewirkt.

41. Verfahren nach einem der Ansprüche 36 bis 40, **dadurch gekennzeichnet, dass** die radiale Expansion der Verbindung gemäß einem Expansionsgrad von mindestens gleich 10 % durchgeführt wird.
